# EUROPEAN PATENT APPLICATION

(11) **EP 4 554 267 A1**
(43) Date of publication of application: **14.05.2025**
(21) Application number: 23852535.6
(22) Date of filing: 07.08.2023
(51) Int. Cl.: H04W 16/26, H04W 16/28, H04W 24/08, H04W 24/10, H04B 17/40, H04B 7/15

(54) **COMMUNICATION METHOD AND RELAY DEVICE**

(30) Priority: 08.08.2022 JP 2022126137
(71) Applicant: Kyocera Corporation, Kyoto-shi, Kyoto 612-8501 (JP)
(72) Inventor: FUJISHIRO, Masato, Kyoto-shi, Kyoto 612-8501 (JP)
(74) Representative: Viering, Jentschura & Partner mbB Patent- und Rechtsanwälte
(86) International application number: PCT/JP2023/028767
(87) International publication number: WO 2024/034573

(57) **Abstract**

A communication method using a relay apparatus in a mobile communication system includes relaying, by a repeater included in the relay apparatus, a radio signal transmitted between a base station and a user equipment, controlling, by a control terminal included in the relay apparatus, the repeater by performing wireless communication with the base station via a control link, detecting, by the control terminal, that a failure has occurred in the control link or the repeater, and performing, by the control terminal, predetermined control in response to the failure.

## Description

### TECHNICAL FIELD

The present disclosure relates to a communication method and a relay apparatus used in a mobile communication system.

### BACKGROUND OF INVENTION

In recent years, a mobile communication system of the fifth generation (5G) has been attracting attention. New Radio (NR), which is a radio access technology of the 5G system, allows broadband transmission via a high frequency band, as compared to Long Term Evolution (LTE), which is a fourth-generation radio access technology.

Since radio signals (radio waves) in the high frequency band such as a millimeter wave band or a terahertz wave band have high rectilinearity, a problem exists in that the coverage of a base station is reduced. In order to solve such a problem, a repeater apparatus is attracting attention. The repeater apparatus is one type of relay apparatus for relaying radio signals between a base station and a user equipment, and can be controlled from a network (see, for example, Non-Patent Document 1). Such a repeater apparatus can extend the coverage of the base station while keeping the interference from occurring by, for example, amplifying a radio signal received from the base station and transmitting the radio signal through directional transmission.

### CITATION LIST

### NON-PATENT LITERATURE

Non-Patent Document 1: 3GPP Contribution: RP-213700, "New SI: Study on NR Network-controlled Repeaters"

### SUMMARY

In a first aspect, a communication method using a relay apparatus in a mobile communication system includes relaying, by a repeater included in the relay apparatus, a radio signal transmitted between a base station and a user equipment, performing, by a control terminal included in the relay apparatus, control of the repeater by performing wireless communication with the base station via a control link, detecting, by the control terminal, that a failure has occurred in the control link or the repeater, and performing, by the control terminal, predetermined control in response to the failure.

In a second aspect, a relay apparatus for use in a mobile communication system includes a repeater configured to relay a radio signal transmitted between a base station and a user equipment, and a control terminal configured to control the repeater by performing wireless communication with the base station via a control link. The control terminal, when detecting that a failure has occurred in the control link or the repeater, performs predetermined control in response to the failure.

### BRIEF DESCRIPTION OF THE DRAWINGS

FIG. 1 is a diagram illustrating a configuration of a mobile communication system according to an embodiment.
FIG. 2 is a diagram illustrating a configuration of a protocol stack of a radio interface of a user plane handling data.
FIG. 3 is a diagram illustrating a configuration of a protocol stack of a radio interface of a control plane handling signaling (control signal).
FIG. 4 is a diagram illustrating an example of an application scenario for a relay apparatus (NCR apparatus) according to a first embodiment.
FIG. 5 is a diagram illustrating an example of the application scenario for the relay apparatus (NCR apparatus) according to the first embodiment.
FIG. 6 is a diagram illustrating an example of a control method of the relay apparatus (NCR apparatus) according to the first embodiment.
FIG. 7 is a diagram illustrating a configuration example of a protocol stack in a mobile communication system that includes the relay apparatus (NCR apparatus) according to the first embodiment.
FIG. 8 is a diagram illustrating a configuration example of the relay apparatus (NCR apparatus) according to the first embodiment.
FIG. 9 is a diagram illustrating a configuration example of a base station (gNB) according to an embodiment.
FIG. 10 is a diagram illustrating an example of downlink signaling from the base station (gNB) to a control terminal (NCR-MT) according to the first embodiment.
FIG. 11 is a diagram illustrating an example of uplink signaling from the control terminal (NCR-MT) to the base station (gNB) according to the first embodiment.
FIG. 12 is a diagram illustrating an example of a general operation sequence of the mobile communication system according to the first embodiment.
FIG. 13 is a diagram for describing beam sweeping according to the first embodiment.
FIG. 14 is a diagram for describing carrier aggregation (CA).
FIG. 15 is a diagram for describing dual connectivity (DC).
FIG. 16 is a diagram illustrating a configuration example when the CA is configured for the NCR apparatus (NCR-MT).
FIG. 17 is a diagram illustrating a configuration example when the DC is configured for the NCR apparatus (NCR-MT).
FIG. 18 is a diagram illustrating a first operation example in which multiple serving cells by way of the CA are used for the NCR apparatus according to the first embodiment.
FIG. 19 is a diagram illustrating a first operation example in which multiple serving cells by way of the DC are used for the NCR apparatus according to the first embodiment.
FIG. 20 is a diagram for describing sCellDeactivationTimer.
FIG. 21 is a diagram illustrating a third operation example in which multiple serving cells are used for the NCR apparatus according to the first embodiment.
FIG. 22 is a diagram illustrating a fourth operation example in which multiple serving cells are used for the NCR apparatus according to the first embodiment.
FIG. 23 is a diagram illustrating a first operation example for failure handling by the NCR apparatus according to the first embodiment.
FIG. 24 is a diagram illustrating a second operation example for the failure handling by the NCR apparatus according to the first embodiment.
FIG. 25 is a diagram illustrating a third operation example for the failure handling by the NCR apparatus according to the first embodiment.
FIG. 26 is a diagram for describing a relay apparatus according to a second embodiment.
FIG. 27 is a diagram for describing the relay apparatus according to the second embodiment.
FIG. 28 is a diagram for describing an operation according to another embodiment.

### DESCRIPTION OF EMBODIMENTS

When a relay apparatus such as a repeater apparatus is controlled from a network, a control technique for specifically controlling the relay apparatus has not yet been established, and efficient coverage extension is currently difficult to perform using the relay apparatus.

The present disclosure provides an appropriately controllable relay apparatus that performs relay transmission between a base station and a user equipment.

A mobile communication system according to an embodiment is described with reference to the drawings. In the description of the drawings, the same or similar parts are denoted by the same or similar reference signs.

### (1) First Embodiment

A first embodiment is described first. The relay apparatus according to the first embodiment is a repeater apparatus that can be controlled from a network.

### (1.1) Mobile Communication System Overview

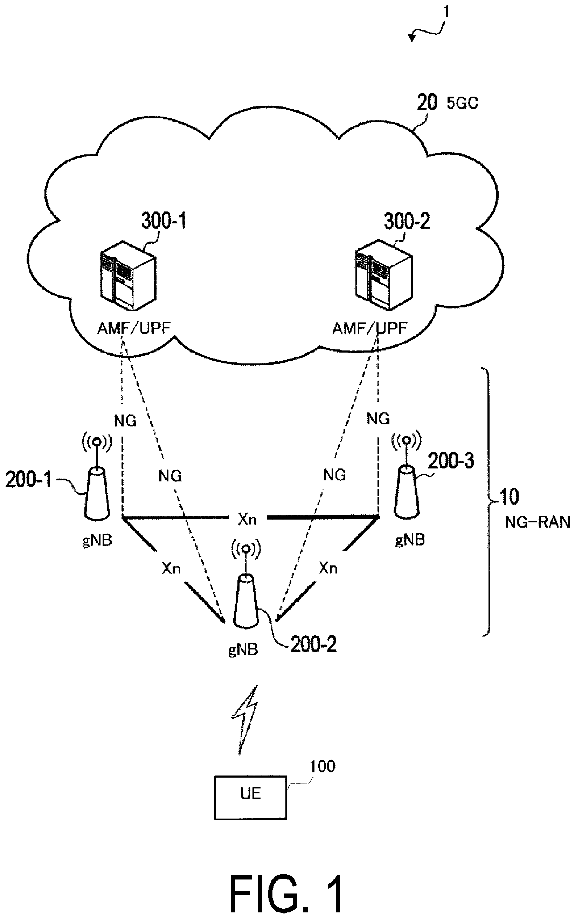

FIG. 1 is a diagram illustrating a configuration of a mobile communication system according to the first embodiment. A mobile communication system 1 complies with the 5th Generation System (5GS) of the 3rd Generation Partnership Project (3GPP) (registered trade name; the same applies below) standard. The description below takes the 5GS as an example, but Long Term Evolution (LTE) system may be at least partially applied to the mobile communication system. A sixth generation (6G) system may be at least partially applied to the mobile communication system.

The mobile communication system 1 includes a User Equipment (UE) 100, a 5G radio access network (Next Generation Radio Access Network (NG-RAN)) 10, and a 5G Core Network (5GC) 20. The NG-RAN 10 may be hereinafter simply referred to as a RAN 10. The 5GC 20 may be simply referred to as a core network (CN) 20.

The UE 100 is a mobile wireless communication apparatus. The UE 100 may be any apparatus as long as the UE 100 is used by a user. Examples of the UE 100 include a mobile phone terminal (including a smartphone) and/or a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The NG-RAN 10 includes base stations (referred to as "gNBs" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter simply referred to as one "frequency").

The gNB 200 may be divided into a Central Unit (CU) and a Distributed Unit (DU). The CU controls the DU. The CU is a unit including upper layers included in a protocol stack described below, such as an RRC layer, an SDAP layer, and a PDCP layer, for example. The CU is connected to a core network via an NG interface which is a backhaul interface. The CU is connected to a neighboring base station via an Xn interface which is an inter-base station interface. The DU forms a cell. The DU 202 is a unit including lower layers included in the protocol stack described below, such as an RLC layer, a MAC layer, and a PHY layer, for example. The DU is connected to the CU via an F1 interface which is a fronthaul interface.

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

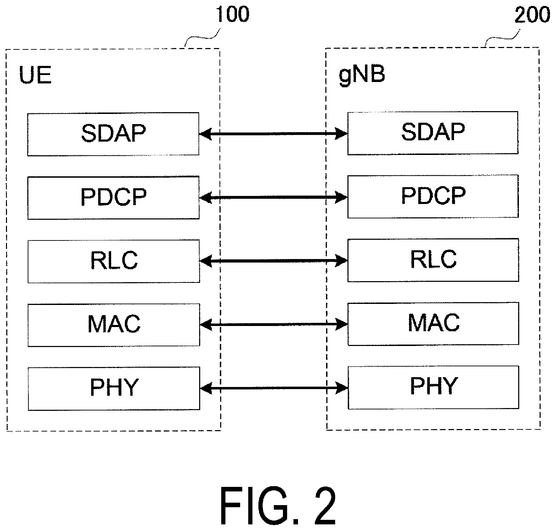

FIG. 2 is a diagram illustrating a configuration of a protocol stack of a radio interface of a user plane handling data.

A radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel. Note that the PHY layer of the UE 100 receives downlink control information (DCI) transmitted from the gNB 200 over a physical downlink control channel (PDCCH). Specifically, the UE 100 performs blind decoding of the PDCCH using a radio network temporary identifier (RNTI) and acquires successfully decoded DCI as DCI addressed to the UE 100. The DCI transmitted from the gNB 200 is appended with CRC parity bits scrambled by the RNTI.

The gNB 200 transmits a synchronization signal block (SSB: Synchronization Signal/PBCH block). For example, the SSB includes four consecutive Orthogonal Frequency Division Multiplex (OFDM) symbols, in which a primary synchronization signal (PSS), a secondary synchronization signal (SSS), a physical broadcast channel (PBCH)/master information block (MIB), and a demodulation reference signal (DMRS) of the PBCH are arranged. A bandwidth of the SSB is, for example, a bandwidth of 240 consecutive subcarriers, that is, 20 RBs.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

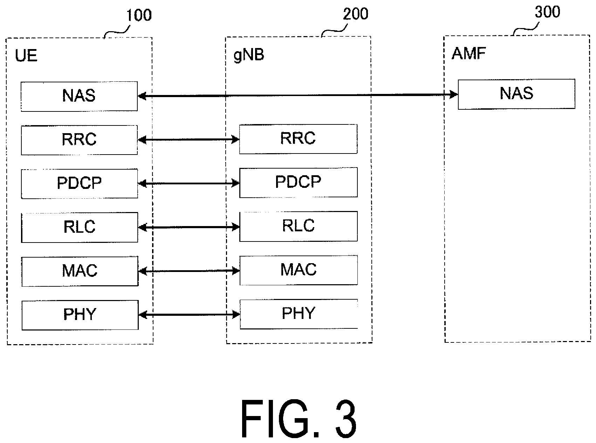

FIG. 3 is a diagram illustrating a configuration of a protocol stack of a radio interface of a control plane handling signaling (a control signal).

The protocol stack of the radio interface of the control plane includes a radio resource control (RRC) layer and a non-access stratum (NAS) layer instead of the SDAP layer illustrated in FIG. 2.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When a connection (RRC connection) between the RRC of the UE 100 and the RRC of the gNB 200 is present, the UE 100 is in an RRC connected state. When no connection (RRC connection) between the RRC of the UE 100 and the RRC of the gNB 200 is present, the UE 100 is in an RRC idle state. When the connection between the RRC of the UE 100 and the RRC of the gNB 200 is suspended, the UE 100 is in an RRC inactive state.

The NAS layer which is positioned upper than the RRC layer performs session management, mobility management, and the like. NAS signaling is transmitted between the NAS layer of the UE 100 and the NAS layer of an AMF 300A. Note that the UE 100 includes an application layer other than the protocol of the radio interface. A layer lower than the NAS layer is referred to as an AS layer.

### (1.2) Example of Application Scenario for Relay Apparatus

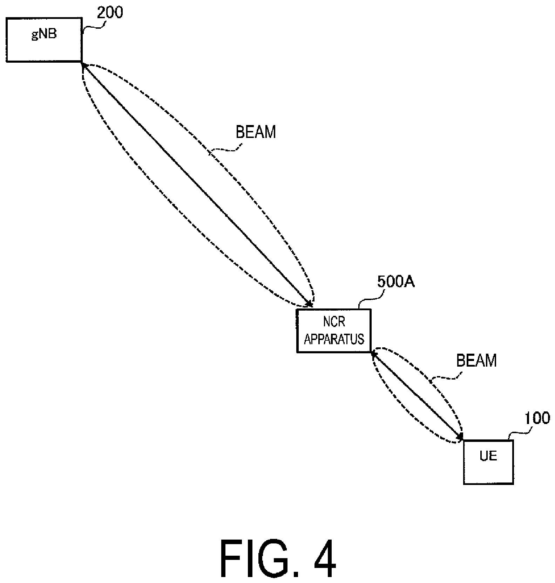

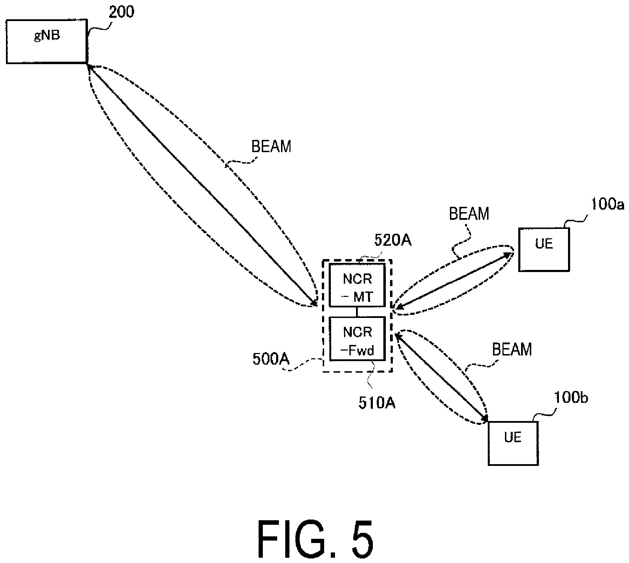

FIGs. 4 and 5 are diagrams illustrating examples of an application scenario for an NCR apparatus according to the first embodiment.

The 5G/NR is capable of wide-band transmission via a high frequency band compared to the 4G/LTE. Since radio signals in the high frequency band such as a millimeter wave band or a terahertz wave band have high rectilinearity, a problem is reduction of coverage of the gNB 200. In FIG. 4, a UE 100 may be located outside a coverage area of the gNB 200, for example, outside an area where the UE 100 can receive radio signals directly from the gNB 200. The UE 100 may be in a state where communication with the gNB 200 cannot be performed within a line of sight because of obstacles existing between the gNB 200 and the UE 100.

As illustrated in FIG. 4, a repeater apparatus (500A) is a type of a relay apparatus relaying radio signals between the gNB 200 and the UE 100, and can be controlled from the network. The repeater apparatus (500A) is introduced into the mobile communication system 1. Hereinafter, such a repeater apparatus is referred to as a Network-Controlled Repeater (NCR) apparatus. Such a repeater apparatus may be referred to as a smart repeater apparatus.

For example, the NCR apparatus 500A amplifies a radio signal (radio wave) received from the gNB 200 and transmits the radio signal through directional transmission. To be specific, the NCR apparatus 500A receives a radio signal transmitted by the gNB 200 through beamforming. The NCR apparatus 500A amplifies the received radio signal without demodulation/modulation and transmits the amplified radio signal through directional transmission. Here, the NCR apparatus 500A may transmit the radio signal with a fixed directivity (beam). The NCR apparatus 500A may transmit a radio signal with a variable (adaptive) directional beam. This can efficiently extend the coverage of the gNB 200. Although in the first embodiment, it is mainly assumed that the NCR apparatus 500A is applied to downlink communication from the gNB 200 to the UE 100, the NCR apparatus 500A can also be applied to uplink communication from the UE 100 to the gNB 200.

As illustrated in FIG. 5, a new UE (hereinafter referred to as an "NCR-Mobile termination (MT)") 520A is introduced that is a type of a control terminal for controlling the NCR apparatus 500A. Specifically, the NCR apparatus 500A includes an NCR-Forward (Fwd) 510A and an NCR-MT 520A. The NCR-Fwd 510A is a kind of a repeater that relays a radio signal transmitted between the gNB 200 and the UE 100, to be more specific, changes a propagation state of the radio signal without demodulating or modulating the radio signal. The NCR-MT 520A performs radio communication with the gNB 200 to control the NCR-Fwd 510A. In this manner, the NCR-MT 520A controls the NCR apparatus 500A in cooperation with the gNB 200 by establishing a radio connection to the gNB 200 and performing wireless communication with the gNB 200. By doing so, efficient coverage extension can be achieved using the NCR apparatus 500A. The NCR-MT 520A controls the NCR apparatus 500A in accordance with control from the gNB 200.

The NCR-MT 520A may be configured separately from the NCR-Fwd 510A. For example, the NCR-MT 520A may be located near the NCR-Fwd 510A and may be electrically connected to the NCR-Fwd 510A. The NCR-MT 520A may be connected to the NCR-Fwd 510A by wire or wirelessly. The NCR-MT 520A may be configured to be integrated with the NCR-Fwd 510A. The NCR-MT 520A and the NCR-Fwd 510A may be fixedly installed at a coverage edge (cell edge) of the gNB 200, or on a wall surface or window of any building, for example. The NCR-MT 520A and the NCR-Fwd 510A may be installed in, for example, a vehicle to be movable. One NCR-MT 520A may control multiple NCR-Fwds 510A.

In the example illustrated in FIG. 5, the NCR apparatus 500A (NCR-Fwd 510A) dynamically or semi-statically changes a beam for transmission or reception. For example, the NCR-Fwd 510A forms a beam toward each of a UE 100a and a UE 100b. The NCR-Fwd 510A may form a beam toward the gNB 200. For example, in a communication resource between the gNB 200 and the UE 100a, the NCR-Fwd 510A transmits a radio signal received from the gNB 200 toward the UE 100a through beamforming and/or transmits a radio signal received from the UE 100a toward the gNB 200 through beamforming. In a communication resource between the gNB 200 and the UE 100b, the NCR-Fwd 510A transmits a radio signal received from the gNB 200 toward the UE 100b through beamforming and/or transmits a radio signal received from the UE 100b toward the gNB 200 through beamforming. Instead of or in addition to the beamforming, the NCR-Fwd 510A may perform null forming (so-called null steering) toward a UE 100 which is not a communication partner (not illustrated) and/or a neighboring gNB 200 (not illustrated) to suppress the interference.

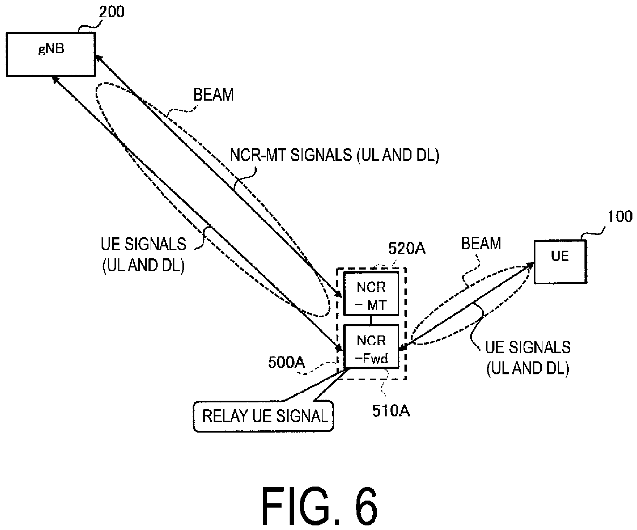

FIG. 6 is a diagram illustrating a control method of the NCR apparatus 500A according to the first embodiment. As illustrated in FIG. 6, the NCR-Fwd 510A relays a radio signal (referred to as a "UE signal") between the gNB 200 and the UE 100. The UE signal includes an uplink signal transmitted from the UE 100 to the gNB 200 (referred to as "UE-UL signal") and a downlink signal transmitted from the gNB 200 to the UE 100 (referred to as "UE-DL signal"). The NCR-Fwd 510A relays the UE-UL signal from the UE 100 to the gNB 200 and relays the UE-DL signal from the gNB 200 to the UE 100. A radio link between the NCR-Fwd 510A and the UE 100 is also referred to as an "access link". A radio link between the NCR-Fwd 510A and the gNB 200 is also referred to as a "backhaul link".

The NCR-MT 520A transmits and receives radio signals (referred to herein as "NCR-MT signals") to and from the gNB 200. The NCR-MT signal includes an uplink signal transmitted from the NCR-MT 520A to the gNB 200 (referred to as an "NCR-MT-UL signal") and a downlink signal transmitted from the gNB 200 to the NCR-MT 520A (referred to as an "NCR-MT-DL signal"). The NCR-MT-UL signal includes signaling for controlling the NCR apparatus 500A. A radio link between the NCR-MT 520A and the gNB 200 is also referred to as a "control link".

The gNB 200 directs a beam to the NCR-MT 520A, based on the NCR-MT-UL signal from the NCR-MT 520A. The NCR apparatus 500A and the NCR-MT 520A are co-located, and thus directing, by the gNB 200, a beam to the NCR-MT 520A results in directing the beam also to the NCR-Fwd 510A when frequencies of the backhaul link and the control link are the same. The gNB 200 transmits the NCR-MT-DL signal and the UE-DL signal using the beam. The NCR-MT 520A receives the NCR-MT-DL signal. Note that, when the NCR-Fwd 510A and NCR-MT 520A are at least partially integrated with each other, in the NCR-Fwd 510A and NCR-MT 520A, functions of transmitting and receiving or relaying UE signals and/or NCR-MT signals (e.g., antennas) may be integrated together. The beam includes a transmission beam and/or a reception beam. The beam is a general term for transmission and/or reception under control for maximizing power of a transmission wave and/or a reception wave in a specific direction by adjusting/adapting an antenna weight or the like.

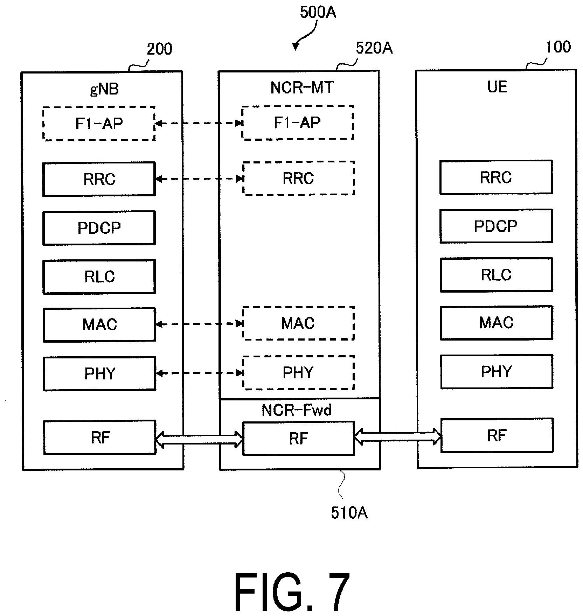

FIG. 7 is a diagram illustrating a configuration example of a protocol stack in the mobile communication system 1 that includes the NCR apparatus 500A according to the first embodiment. The NCR-Fwd 510A relays a radio signal transmitted and received between the gNB 200 and the UE 100. The NCR-Fwd 510A has a Radio Frequency (RF) function of amplifying and relaying a received radio signal, and performs directional transmission through beamforming (for example, analog beamforming).

The NCR-MT 520A includes at least one layer (entity) selected from the group consisting of PHY, MAC, RRC, and F1-AP (Application Protocol). The F1-AP is a type of a fronthaul interface. The NCR-MT 520A communicates downlink signaling and/or uplink signaling, which will be described below, with the gNB 200 through at least one selected from the group consisting of the PHY, the MAC, RRC, and the F1-AP. When the NCR-MT 520A is a type or a part of the base station, the NCR-MT 520A may communicate with the gNB 200 through an AP of Xn (Xn-AP) which is an inter-base station interface.

### (1.3) Configuration Example of Relay Apparatus

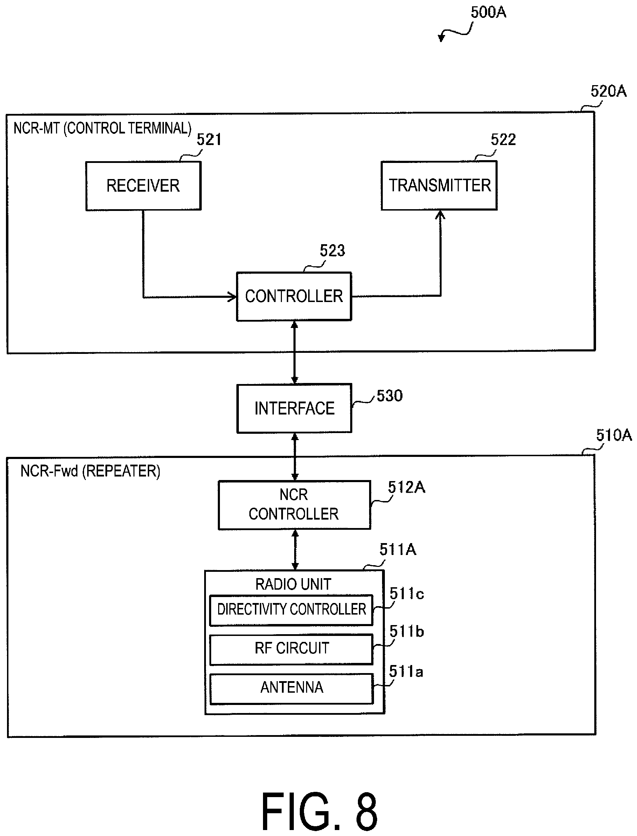

FIG. 8 is a diagram illustrating a configuration example of the NCR apparatus 500A as the relay apparatus according to the first embodiment. The NCR apparatus 500A includes the NCR-Fwd 510A, the NCR-MT 520A, and an interface 530.

The NCR-Fwd 510A includes a radio unit 511A and an NCR controller 512A. The radio unit 511A includes an antenna 511a including multiple antennas (multiple antenna elements), an RF circuit 511b including an amplifier, and a directivity controller 511c controlling directivity of the antenna 511a. The RF circuit 511b amplifies and relays (transmits) radio signals transmitted and received by the antenna 511a. The RF circuit 511b may convert a radio signal, which is an analog signal, into a digital signal, and may reconvert the digital signal into an analog signal after digital signal processing. The directivity controller 511c may perform analog beamforming by analog signal processing. The directivity controller 511c may perform digital beamforming by digital signal processing. The directivity controller 511c may perform analog and digital hybrid beamforming. The NCR controller 512A controls the radio unit 511A in response to a control signal from the NCR-MT 520A. The NCR controller 512A may include at least one processor. The NCR controller 512A may output information relating to a capability of the NCR apparatus 500A to the NCR-MT 520A.

The NCR-MT 520A includes a receiver 521, a transmitter 522, and a controller 523. The receiver 521 performs various types of reception under control of the controller 523. The receiver 521 includes an antenna and a reception device. The reception device converts a radio signal (radio signal) received through the antenna into a baseband signal (a reception signal) and outputs the resulting signal to the controller 523. The transmitter 522 performs various types of transmission under control of the controller 523. The transmitter 522 includes an antenna and a transmission device. The transmission device converts a baseband signal (a transmission signal) output by the controller 523 into a radio signal and transmits the resulting signal through the antenna. The controller 523 performs various types of controls in the NCR-MT 520A. The controller 523 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like on a baseband signal. The CPU executes the program stored in the memory to thereby perform various types of processing. The controller 523 performs a function of at least one layer selected from the group consisting of the PHY, the MAC, the RRC, and the F1-AP.

The interface 530 electrically connects the NCR-Fwd 510A and the NCR-MT 520A. The controller 523 of the NCR-MT 520A controls the NCR-Fwd 510A via the interface 530.

In the first embodiment, the receiver 521 of the NCR-MT 520A receives signaling (downlink signaling) used to control the NCR apparatus 500A from the gNB 200 through wireless communication. The controller 523 of the NCR-MT 520A controls the NCR apparatus 500A based on the signaling. This enables the gNB 200 to control the NCR-Fwd 510A via the NCR-MT 520A.

In the first embodiment, the controller 523 of the NCR-MT 520A may transmit the NCR capability information indicating the capability of the NCR apparatus 500A to the gNB 200 through wireless communication. The NCR capability information is an example of the uplink signaling from the NCR-MT 520A to the gNB 200. This enables the gNB 200 to recognize the capability of the NCR apparatus 500A.

### (1.4) Configuration Example of Base Station

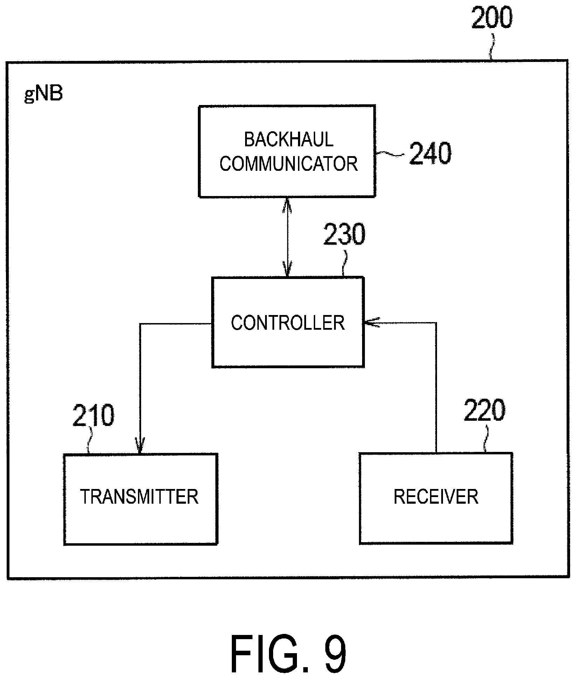

FIG. 9 is a diagram illustrating a configuration example of the gNB 200 according to the first embodiment. The gNB 200 includes a transmitter 210, a receiver 220, a controller 230, and a backhaul communicator 240.

The transmitter 210 performs various types of transmission under control of the controller 230. The transmitter 210 includes an antenna and a transmission device. The transmission device converts a baseband signal (a transmission signal) output by the controller 230 into a radio signal and transmits the resulting signal through the antenna. The receiver 220 performs various types of reception under control of the controller 230. The receiver 220 includes an antenna and a reception device. The reception device converts a radio signal received through the antenna into a baseband signal (a reception signal) and outputs the resulting signal to the controller 230. The transmitter 210 and the receiver 220 may be capable of beamforming using multiple antennas.

The controller 230 performs various types of controls for the gNB 200. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like on a baseband signal. The CPU executes the program stored in the memory to thereby perform various types of processing.

The backhaul communicator 240 is connected to a neighboring base station via the inter-base station interface. The backhaul communicator 240 is connected to the AMF/UPF 300 via the interface between a base station and the core network. Note that the gNB may include a Central Unit (CU) and a Distributed Unit (DU) (i.e., functions are divided), and both units may be connected via an F1 interface.

In the first embodiment, the transmitter 210 of the gNB 200 transmits signaling (downlink signaling) used to control the NCR-Fwd 510A to the NCR-MT 520A through wireless communication. This enables the gNB 200 to control the NCR apparatus 500A via the NCR-MT 520A. In the first embodiment, the receiver 220 of the gNB 200 may receive the NCR capability information indicating the capability of the NCR apparatus 500A from the NCR-MT 520A through wireless communication.

### (1.5) Example of Downlink Signaling

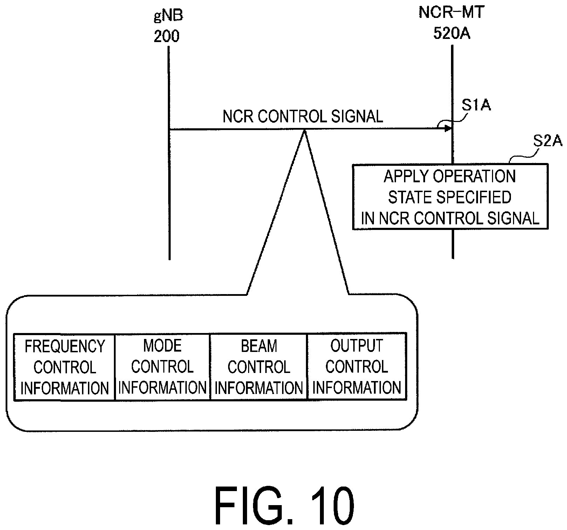

FIG. 10 is a diagram illustrating an example of the downlink signaling from the gNB 200 to the NCR-MT 520A according to the first embodiment.

The gNB 200 (transmitter 210) transmits downlink signaling to the NCR-MT 520A. The downlink signaling may be an RRC message that is RRC layer (i.e., layer-3) signaling. The downlink signaling may be a MAC Control Element (CE) that is MAC layer (i.e., layer-2) signaling. The downlink signaling may be downlink control information (DCI) that is PHY layer (i.e., layer-1) signaling. The downlink signaling may be UE-specific signaling. The downlink signaling may be broadcast signaling. The downlink signaling may be a fronthaul message (for example, F1-AP message). When the NCR-MT 520A is a type or a part of the base station, the NCR-MT 520A may communicate with the gNB 200 through an AP of Xn (Xn-AP) which is an inter-base station interface.

For example, the gNB 200 (transmitter 210) transmits an NCR control signal designating an operation state of the NCR apparatus 500A as the downlink signaling to the NCR-MT 520A having established a radio connection to the gNB 200 (step S1A). The NCR control signal designating the operation state of the NCR apparatus 500A may be the MAC CE that is the MAC layer (layer-2) signaling or the DCI that is the PHY layer (layer-1) signaling. However, the NCR control signal may be included in an RRC Reconfiguration message that is a type of a UE-specific RRC message to transmit to the NCR-MT 520A. The downlink signaling may be a message of a layer (for example, an NCR application) higher than the RRC layer. The downlink signaling may be transmitting a message of a layer higher than the RRC layer encapsulated with a message of a layer equal to or lower than the RRC layer. Note that the NCR-MT 520A (transmitter 522) may transmit a response message with respect to the downlink signaling from the gNB 200 in the uplink. The response message may be transmitted in response to the NCR apparatus 500A completing the configuration designated in the downlink signaling or receiving the configuration. The NCR control signal may be referred to as Side Control Information.

The NCR control signal may include frequency control information to designate a center frequency of a radio signal (for example, a component carrier) that is a target to be relayed by the NCR-Fwd 510A. When the NCR control signal received from the gNB 200 includes the frequency control information, the NCR-MT 520A (controller 523) controls the NCR-Fwd 510A such that the NCR-Fwd 510A relays a radio signal as the target to be relayed that has a center frequency indicated by the frequency control information (step S2A). The NCR control signal may include multiple pieces of frequency control information to designate center frequencies different from each other. Since the NCR control signal includes the frequency control information, the gNB 200 can designate the center frequency of the radio signal that is the target to be relayed by the NCR-Fwd 510A via the NCR-MT 520A.

The NCR control signal may include mode control information to designate an operation mode of the NCR-Fwd 510A. The mode control information may be associated with the frequency control information (center frequency). The operation mode may be any one of a mode in which the NCR-Fwd 510A performs non-directional transmission and/or reception, a mode in which the NCR-Fwd 510A performs fixed-directional transmission and/or reception, a mode in which the NCR-Fwd 510A performs transmission and/or reception with a variable directional beam, and a mode in which the NCR-Fwd 510A performs Multiple Input Multiple Output (MIMO) relay transmission. The operation mode may be either a beamforming mode (that is, a mode in which improvement of a desired wave is emphasized) or a null steering mode (that is, a mode in which suppression of an interference wave is emphasized). When the NCR control signal received from the gNB 200 includes the mode control information, the NCR-MT 520A (controller 523) controls the NCR-Fwd 510A such that the NCR-Fwd 510A operates in the operation mode indicated by the mode control information (step S2A). Since the NCR control signal includes the mode control information, the gNB 200 can designate the operation mode of the NCR-Fwd 510A via the NCR-MT 520A.

Here, the mode in which the NCR apparatus 500A performs non-directional transmission and/or reception is a mode in which the NCR-Fwd 510A performs relay in all directions and may be referred to as an omnidirectional mode. The mode in which the NCR-Fwd 510A performs fixed-directional transmission and/or reception may be a directivity mode realized by one directional antenna. The mode may be a beamforming mode realized by applying fixed phase and amplitude control (antenna weight control) to multiple antennas. Any of these modes may be designated (configured) from the gNB 200 to the NCR-MT 520A. The mode in which the NCR-Fwd 510A performs transmission and/or reception with a variable directional beam may be a mode for performing analog beamforming. The mode may be a mode in which hybrid beamforming is performed. The mode may be a mode in which hybrid beamforming is performed. The mode may be a mode for forming an adaptive beam specific to the UE 100. Any of these modes may be designated (configured) from the gNB 200 to the NCR-MT 520A. Note that in the operation mode in which beamforming is performed, beam control information described below may be provided from the gNB 200 to the NCR-MT 520A. The mode in which the NCR apparatus 500A performs MIMO relay transmission may be a mode for performing Single-User (SU) spatial multiplexing. The mode may be a mode for performing Multi-User (MU) spatial multiplexing. The mode may be a mode for performing transmission diversity. Any of these modes may be designated (configured) from the gNB 200 to the NCR-MT 520A. The operation mode may include a mode in which relay transmission by the NCR-Fwd 510A is turned on (activated) and a mode in which relay transmission by the NCR-Fwd 510A is turned off (deactivated). Any of these modes may be designated (configured) from the gNB 200 to the NCR-MT 520A in the NCR control signal.

The NCR control signal may include the beam control information to designate a transmission direction, a transmission weight, or a beam pattern for the NCR-Fwd 510A to perform directional transmission. The beam control information may be associated with the frequency control information (center frequency). The beam control information may include a Precoding Matrix Indicator (PMI). The beam control information may include beam forming angle information. When the NCR control signal received from the gNB 200 includes the beam control information, the NCR-MT 520A (controller 523) controls the NCR-Fwd 510A such that the NCR-Fwd 510A forms a transmission directivity (beam) indicated by the beam control information (step S2A). Since the NCR control signal includes the beam control information, the gNB 200 can control the transmission directivity of the NCR apparatus 500A via the NCR-MT 520A.

The NCR control signal may include output control information to designate a degree for the NCR-Fwd 510A to amplify a radio signal (amplification gain) or transmission power. The output control information may be information indicating a difference value (that is, a relative value) between the current amplification gain or transmission power and the target amplification gain or transmission power. When the NCR control signal received from the gNB 200 includes the output control information, the NCR-MT 520A (controller 523) controls the NCR-Fwd 510A such that the amplification gain or transmission power is changed to an amplification gain or transmission power indicated by the output control information (step S2A). The output control information may be associated with the frequency control information (center frequency). The output control information may be information to designate any one of an amplification gain, a beamforming gain, and an antenna gain of the NCR-Fwd 510A. The output control information may be information to designate the transmission power of the NCR-Fwd 510A.

When one NCR-MT 520A controls multiple NCR-Fwds 510A, the gNB 200 (transmitter 210) may transmit the NCR control signal for each of the NCR-Fwds 510A to the NCR-MT 520A. In this case, the NCR control signal may include an identifier of the corresponding NCR-Fwd 510A (NCR identifier). The NCR-MT 520A (controller 523) controlling the multiple NCR-Fwds 510A determines the NCR-Fwd 510A to which the NCR control signal received from the gNB 200 is applied, based on the NCR identifier included in the received NCR control signal. Note that the NCR identifier may be transmitted together with the NCR control signal from the NCR-MT 520A to the gNB 200 even when the NCR-MT 520A controls only one NCR-Fwd 510A.

As described above, the NCR-MT 520A (controller 523) controls the NCR-Fwd 510A based on the NCR control signal from the gNB 200. This enables the gNB 200 to control the NCR-Fwd 510A via the NCR-MT 520A.

### (1.6) Example of Uplink Signaling

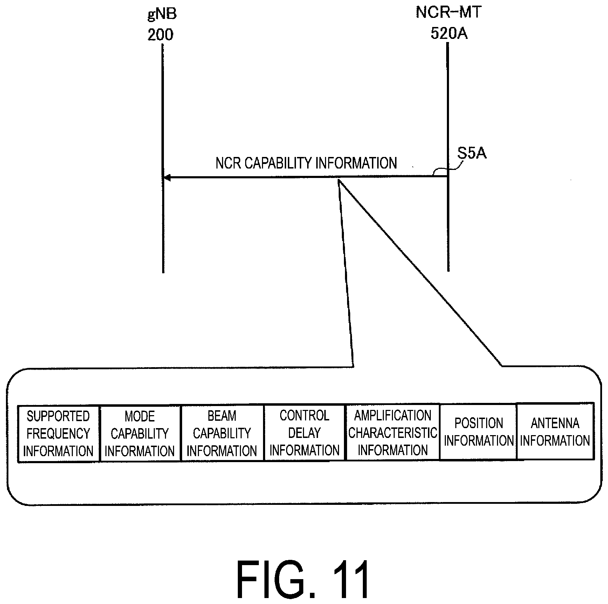

FIG. 11 is a diagram illustrating an example of the uplink signaling from the NCR-MT 520A to the gNB 200 according to the first embodiment.

The NCR-MT 520A (transmitter 210) transmits uplink signaling to the gNB 200. The uplink signaling may be an RRC message that is RRC layer signaling. The uplink signaling may be a MAC CE that is MAC layer signaling. The uplink signaling may be uplink control information (UCI) that is PHY layer signaling. The uplink signaling may be a fronthaul message (for example, F1-AP message). The uplink signaling may be an inter-base station message (for example, Xn-AP message). The uplink signaling may be a message of a layer (for example, an NCR application) higher than the RRC layer. The uplink signaling may be transmitting a message of a layer higher than the RRC layer encapsulated with a message of a layer equal to or lower than the RRC layer. That is, the uplink signaling stores a higher layer message in a lower layer container. Note that the gNB 200 (transmitter 210) may transmit a response message with respect to the uplink signaling from the NCR-MT 520A in the downlink, and the NCR-MT 520A (receiver 521) may receive the response message.

For example, the NCR-MT 520A (transmitter 522) having established a radio connection to the gNB 200 transmits the NCR capability information indicating the capability of the NCR apparatus 500A to the gNB 200 as the uplink signaling (step S5A). The NCR-MT 520A (transmitter 522) may include the NCR capability information in a UE Capability message or a UE Assistant Information message that is a type of the RRC message to transmit to the gNB 200. The NCR-MT 520A (transmitter 522) may transmit the NCR capability information (NCR capability information and/or operation state information) to the gNB 200 in response to a request or inquiry from the gNB 200.

The NCR capability information may include supported frequency information indicating a frequency supported by the NCR-Fwd 510A. The supported frequency information may be a numerical value or index indicating a center frequency of the frequency supported by the NCR-Fwd 510A. The supported frequency information may be a numerical value or index indicating a range of the frequencies supported by the NCR-Fwd 510A. When the NCR capability information received from the NCR-MT 520A includes the supported frequency information, the gNB 200 (controller 230) can recognize the frequency supported by the NCR-Fwd 510A, based on the supported frequency information. The gNB 200 (controller 230) may configure the center frequency of the radio signal that is the target to be relayed by the NCR apparatus 500A within the range of the frequencies supported by the NCR-Fwd 510A.

The NCR capability information may include mode capability information relating to the operation modes or switching between the operation modes that can be supported by the NCR-Fwd 510A. The operation mode may be, as described above, at least any one selected from the group consisting of a mode in which the NCR-Fwd 510A performs non-directional transmission and/or reception, a mode in which the NCR-Fwd 510A performs fixed-directional transmission and/or reception, a mode in which the NCR-Fwd 510A performs transmission and/or reception with a variable directional beam, and a mode in which the NCR-Fwd 510A performs Multiple Input Multiple Output (MIMO) relay transmission. The operation mode may be either a beamforming mode (that is, a mode in which improvement of a desired wave is emphasized) or a null steering mode (that is, a mode in which suppression of an interference wave is emphasized). The mode capability information may be information indicating which operation mode among these operation modes the NCR-Fwd 510A can support. The mode capability information may be information indicating between which operation modes among these operation modes the mode switching is possible. When the NCR capability information received from the NCR-MT 520A includes the mode capability information, the gNB 200 (controller 230) can recognize the operation modes and mode switching supported by the NCR-Fwd 510A, based on the mode capability information. The gNB 200 (controller 230) may configure the operation mode of the NCR-Fwd 510A within a range of the recognized operation modes and mode switching.

The NCR capability information may include the beam capability information indicating a beam variable range, a beam variable resolution, or the number of variable patterns when the NCR-Fwd 510A performs transmission and/or reception with a variable directional beam. The beam capability information may be, for example, information indicating a variable range of a beam angle with respect to the horizontal direction or the vertical direction (for example, being controllable from 30° to 90°). The beam capability information may be information indicating an absolute angle. The beam capability information may be represented by a direction and/or an elevation angle at which a beam is directed. The beam capability information may be information indicating an angular change for each variable step (for example, horizontal 5°/step, vertical 10°/step). The beam capability information may be information indicating the number of variable steps (for example, horizontal 10 steps and vertical 20 steps). The beam capability information may be information indicating the number of variable patterns of a beam in the NCR-Fwd 510A (for example, a total of 10 patterns of beam patterns 1 to 10). When the NCR capability information received from the NCR-MT 520A includes the beam capability information, the gNB 200 (controller 230) can recognize the beam angle change or beam patterns that can be supported by the NCR-Fwd 510A, based on the beam capability information. The gNB 200 (controller 230) may configure a beam of the NCR-Fwd 510A within a range of the recognized beam angle change or beam patterns. These pieces of beam capability information may be null capability information. For the null capability information, these pieces of beam capability information indicate a null control capability when null steering is performed.

The NCR capability information may include control delay information indicating a control delay time in the NCR apparatus 500A. For example, the control delay information is information indicating a delay time (for example, 1 ms, 10 ms...) from a timing at which the UE 100 receives an NCR control signal or a timing at which the UE 100 transmits configuration completion for the NCR control signal to the gNB 200 until the UE 100 completes control (change of the operation mode and/or change of the beam) according to the NCR control signal. When the NCR capability information received from the NCR-MT 520A includes the control delay information, the gNB 200 (controller 230) can recognize the control delay time in the NCR-Fwd 510A, based on the control delay information.

The NCR capability information may include amplification characteristic information relating to radio signal amplification characteristics or output power characteristics in the NCR-Fwd 510A. The amplification characteristic information may be information indicating an amplifier gain (dB), a beamforming gain (dB), and an antenna gain (dBi) of the NCR-Fwd 510A. The amplification characteristic information may be information indicating an amplification variable range (for example, 0 dB to 60 dB) in the NCR-Fwd 510A. The amplification characteristic information may be information indicating the number of steps (for example, 10 steps) of the amplification degrees that can be changed by the NCR-Fwd 510A or the amplification degree for each variable step (for example, 10 dB/step). The amplification characteristic information may be information indicating an output power variable range (for example, 0 dBm to 30 dBm) of the NCR-Fwd 510A. The amplification characteristic information may be information indicating the number of steps (for example, 10 steps) of the output power that can be changed by the NCR-Fwd 510A or the output power for each variable step (for example, 10 dBm/step or 10dB/step).

The NCR capability information may include position information indicating an installation location of the NCR apparatus 500A. The position information may include any one or more of latitude, longitude, and altitude. The position information may include information indicating a distance and/or an installation angle of the NCR apparatus 500A with respect to the gNB 200. The installation angle may be a relative angle with respect to the gNB 200, or a relative angle with respect to, for example, north, vertical, or horizontal. The installation location may be position information of a place where the antenna 511a of the NCR-Fwd 510A is installed.

The NCR capability information may include antenna information indicating the number of antennas included in the NCR-Fwd 510A. The antenna information may be information indicating the number of antenna ports included in the NCR-Fwd 510A. The antenna information may be information indicating a degree of freedom of the directivity control (beam or null formation). The degree of freedom indicates how many beams can be formed (controlled) and is usually "(the number of antennas) - 1". For example, in the case of two antennas, the degree of freedom is one. In the case of two antennas, an 8-shaped beam pattern is formed, but the directivity control can be performed only in one direction, so that the degree of freedom is one.

When the NCR-MT 520A controls multiple NCR-Fwds 510A, the NCR-MT 520A (transmitter 522) may transmit the NCR capability information for each NCR-Fwd 510A to the gNB 200. In this case, the NCR capability information may include the number of NCR-Fwds 510A and/or identifiers of the corresponding NCR-Fwds 510A (NCR identifiers). When the NCR-MT 520A controls multiple NCR-Fwds 510A, the NCR-MT 520A (transmitter 522) may transmit information indicating the respective identifiers of the multiple NCR-Fwds 510A and/or the number of the multiple NCR-Fwds 510A. Note that the NCR identifier may be transmitted together with the NCR capability information from the NCR-MT 520A to the gNB 200 even when the NCR-MT 520A controls only one NCR-Fwd 510A.

### (1.7) Example of General Operation Sequence

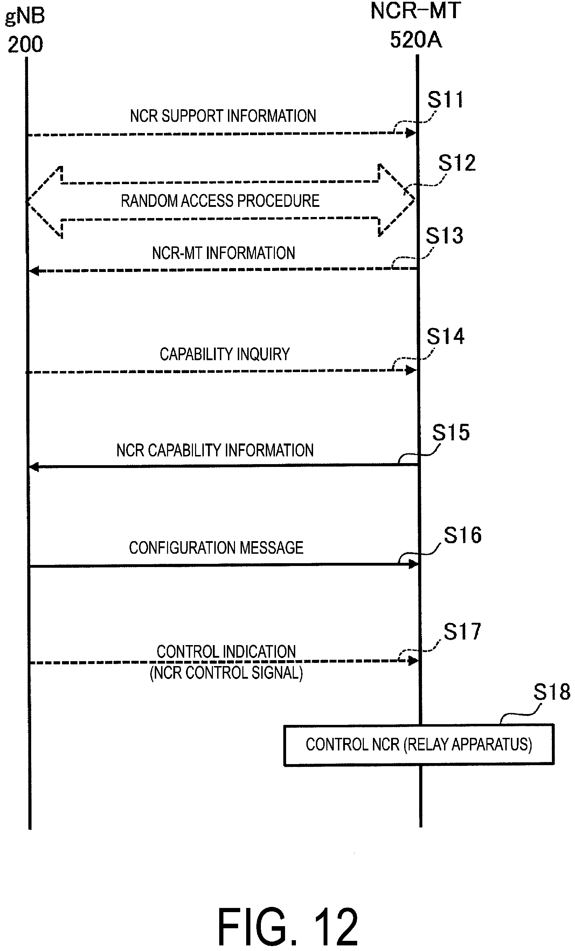

FIG. 12 is a diagram illustrating an example of a general operation sequence of the mobile communication system 1 according to the first embodiment. In the sequence diagram referred to in the embodiment described below, dashed lines indicate non-essential steps. Note that although description in detail will be given below, "NCR" in FIG. 12 may be interpreted as "RIS".

In step S11, the gNB 200 (transmitter 210) broadcasts NCR support information indicating that the gNB 200 supports the NCR-MT 520A. For example, the gNB 200 (transmitter 210) broadcasts a system information block (SIB) including the NCR support information. The NCR support information may be information indicating that the NCR-MT 520A is accessible. The gNB 200 (transmitter 210) may broadcast NCR non-support information indicating that the gNB 200 does not support the NCR-MT 520A. The NCR non-support information may be information indicating that the NCR-MT 520A is inaccessible.

In this stage, the NCR-MT 520A may be in the RRC idle state or RRC inactive state. The NCR-MT 520A (controller 523) having not established a radio connection to the gNB 200 may determine that access to the gNB 200 is permitted in response to receiving the NCR support information from the gNB 200, and may perform an access operation to establish a radio connection to the gNB 200. The NCR-MT 520A (controller 523) may regard the gNB 200 (cell) to which access is permitted as the highest priority and perform cell reselection.

On the other hand, when the gNB 200 does not broadcast the NCR support information (or when the gNB 200 broadcasts the NCR non-support information), the NCR-MT 520A (controller 523) having not established a radio connection to the gNB 200 may determine that access (connection establishment) to the gNB 200 is not possible. This enables the NCR-MT 520A to establish a radio connection only to the gNB 200 capable of handling the NCR-MT 520A.

Note that when the gNB 200 is congested, the gNB 200 may broadcast access restriction information to restrict an access from the UE 100. However, unlike a normal UE 100, the NCR-MT 520A can be regarded as a network-side entity. Therefore, the NCR-MT 520A may ignore the access restriction information from the gNB 200. For example, the NCR-MT 520A (controller 523), when receiving the NCR support information from the gNB 200, may perform an operation to establish a radio connection to the gNB 200 even if the gNB 200 broadcasts the access restriction information. For example, the NCR-MT 520A (controller 523) may not need to perform (or may ignore) Unified Access Control (UAC). Alternatively, any one or both of Access Category/Access Identity (AC/AI) used in the UAC may be a special value indicating that the access is made by the NCR-MT.

In step S12, the NCR-MT 520A (controller 523) initiates a random access procedure for the gNB 200. In the random access procedure, the NCR-MT 520A (transmitter 522) transmits a random access preamble (Msg1) and an RRC message (Msg3) to the gNB 200. In the random access procedure, the NCR-MT 520A (receiver 521) receives a random access response (Msg2) and an RRC message (Msg4) from the gNB 200.

In step S13, when establishing a radio connection to the gNB 200, the NCR-MT 520A (transmitter 522) may transmit to the gNB 200 NCR-MT information indicating that the NCR-MT 520A itself is an NCR-MT. For example, the NCR-MT 520A (transmitter 522), during the random access procedure with the gNB 200, includes the NCR-MT information in the message (for example, Msg1, Msg3, Msg5) for the random access procedure to transmit to the gNB 200. The gNB 200 (controller 230) recognizes that the accessing UE 100 is the NCR-MT 520A, based on the NCR-MT information received from the NCR-MT 520A. The gNB 200 (controller 230) can exclude from the access restriction target (in other words, accept the access from), for example, the NCR-MT 520A. When the random access procedure is completed, the NCR-MT 520A transitions from the RRC idle state or the RRC inactive state to the RRC connected state.

In step S14, the gNB 200 (transmitter 522) transmits a capability inquiry message to inquire the capability of the NCR-MT 520A to the NCR-MT 520A. The NCR-MT 520A (receiver 521) receives the capability inquiry message.

In step S15, the NCR-MT 520A (transmitter 522) transmits a capability information message including the NCR capability information to the gNB 200. The capability information message may be an RRC message, for example, a UE Capability message. The gNB 200 (receiver 220) receives the capability information message. The gNB 200 (controller 230) recognizes the capability of the NCR apparatus 500A based on the received capability information message.

In step S16, the gNB 200 (transmitter 522) transmits a configuration message including various configurations regarding the NCR apparatus 500A to the NCR-MT 520A. The NCR-MT 520A (receiver 521) receives the configuration message. The configuration message is a type of the above-described downlink signaling. The configuration message may be an RRC message, for example an RRC reconfiguration message.

In step S17, the gNB 200 (transmitter 522) transmits the control indication designating the operation state of the NCR-Fwd 510A to the NCR-MT 520A. The control indication may be the NCR control signal (for example, L1/L2 signaling) described above. The NCR-MT 520A (receiver 521) receives the control indication. The NCR-MT 520A (controller 523) controls the NCR-Fwd 510A in response to the control indication.

In step S18, the NCR-MT 520A controls the NCR apparatus 500A according to the configuration (and control indication). The NCR-MT 520A may autonomously control the NCR apparatus 500A without depending on the control indication from the gNB 200. For example, the NCR-MT 520A may autonomously control the NCR apparatus 500A based on a position of the UE 100 and/or information received from the UE 100 by the NCR-MT 520A.

### (1.8) Beam Sweeping

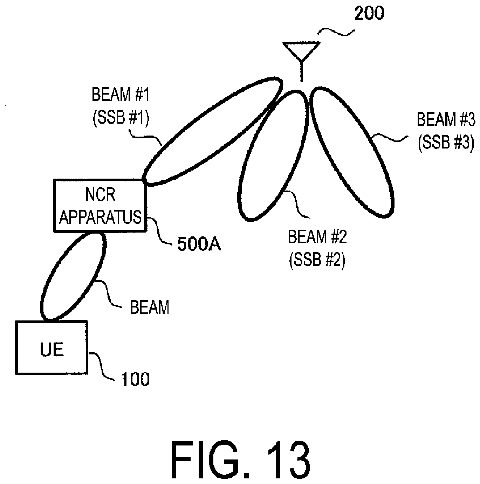

FIG. 13 is a diagram for describing beam sweeping according to the embodiment.

The gNB 200 performs beam sweeping in which transmission is performed while sequentially switching beams in different directions. At this time, the gNB 200 transmits a different SSB for each beam. The SSB is periodically transmitted from the gNB 200 into the cell as an SSB burst including multiple SSBs. An SSB index, which is an identifier, is assigned to each of the multiple SSBs in one SSB burst. The SSBs are beamformed and transmitted in different directions. The NCR apparatus 500A (NCR-MT 520A) reports, to the gNB 200 during a Random Access Channel (RACH) procedure, in which direction the beam had a good reception quality. Specifically, the NCR apparatus 500A (NCR-MT 520A) transmits a random access preamble to the gNB 200 at a random access channel (RACH) occasion associated with the SSB index of which the beam had a good reception quality. As a result, the gNB 200 can recognize the optimum beam for the NCR apparatus 500A (NCR-MT 520A).

Such an SSB may be transmitted in the initial BWP (initial DL BWP). When the NCR apparatus 500A (NCR-MT 520A) is in the RRC connected state, a dedicated BWP may be configured and activated for the NCR apparatus 500A (NCR-MT 520A). In the dedicated BWP, a channel state information reference signal (CSI-RS) may be used as a reference signal instead of the SSB. Hereinafter, on the assumption that a beam and an SSB (specifically, an SSB index) have a one-to-one relationship, an example in which beam information for identifying a beam is an SSB index will be mainly described. However, the beam may be associated with the CSI-RS. The beam information for identifying a beam may be a CSI-RS index.

### (1.9) Carrier Aggregation and Dual Connectivity

As described in the following embodiments, in the embodiments, the gNB 200 can configure multiple serving cells for the NCR apparatus 500A (NCR-MT 520A) by carrier aggregation or dual connectivity (DC). Prior to the description of such operations, general CA and DC will be described.

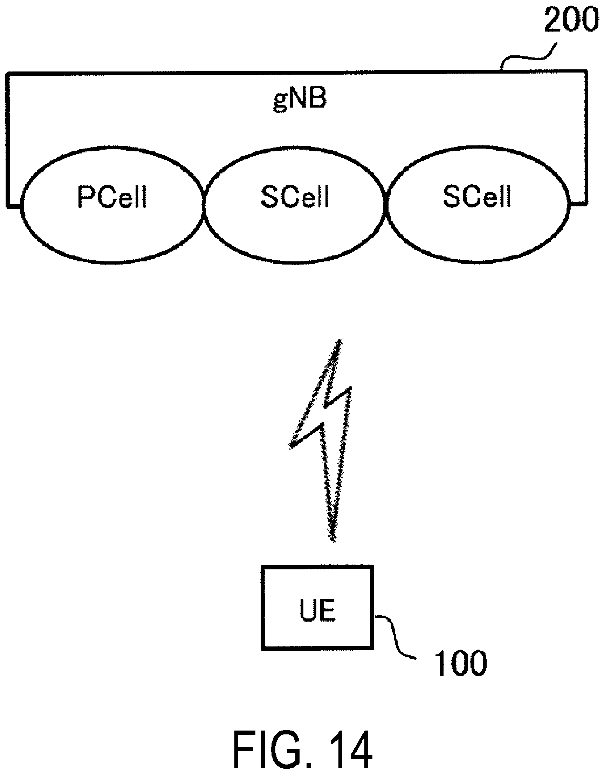

FIG. 14 is a diagram for describing the CA. In the CA, multiple component carriers (CCs) corresponding to the multiple serving cells are aggregated, enabling the UE 100 to simultaneously receive or transmit over the multiple CCs. The multiple CCs may be contiguous in the frequency direction. The multiple CCs may be non-contiguous.

When the CA is configured, the UE 100 has only one RRC connection to the network (for example, gNB 200). For RRC connection establishment/re-establishment/handover, one serving cell provides the NAS mobility information, and for RRC connection re-establishment/handover, one serving cell provides the security input. The one serving cell is referred to as a primary cell (PCell). A set of serving cells may be formed by configuring a secondary cell (SCell) together with the PCell for the UE 100. Accordingly, the set of serving cells configured for the UE 100 always includes one PCell and one or multiple SCells. The SCell can be re-configured, added, and deleted through RRC. Note that the primary cell is an MCG cell operating at the primary frequencies where the UE 100 performs the initial connection establishment procedure or initiates the connection re-establishment procedure. When the UE 100 receives a RRCSetup message from a cell in the initial connection establishment procedure, the UE 100 considers the cell as the primary cell.

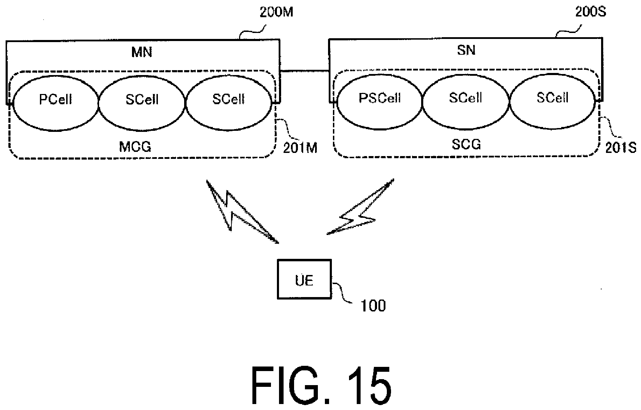

FIG. 15 is a diagram for describing the DC. According to DC, the UE 100 performs simultaneous communication with a master cell group (MCG) 201M managed by a master node (MN) 200M and a secondary cell group (SCG) 201S managed by a secondary node (SN) 200S. The MN 200M and the SN 200S are connected to each other via a network interface (specifically, an inter-base station interface). The network interface may be an Xn interface or an X2 interface. Note that the MN 200M may be referred to as a master base station, and the SN 200S may be referred to as a secondary base station. In the following description of the embodiment, an example is described in which each of the MN 200M and the SN 200S is the gNB 200, but the MN 200M and/or the SN 200S may be an LTE base station (eNB).

For example, the MN 200M transmits a predetermined message (e.g., SN Addition Request message) to the SN 200S, and the MN 200M transmits an RRC Reconfiguration message to the UE 100 to start DC. In the DC, radio resources are allocated to the UE 100 in the RRC connected state by the schedulers of the MN 200M and the SN 200S to perform wireless communication using the radio resources of the MN 200M and the radio resources of the SN 200S.

The MN 200M may have control plane connection to the core network. The MN 200M provides main radio resources for the UE 100. The MN 200M manages the MCG 201M. The MCG 201M is a group of serving cells associated with the MN 200M. The MCG 201M includes a Primary Cell (PCell) and optionally includes one or more Secondary Cells (SCells). The SN 200S may not need to have control plane connection to the core network. The SN 200S provides additional radio resources to the UE 100. The SN 200S manages the SCG 201S. The SCG 201S includes a primary secondary cell (PSCell) and optionally includes one or more SCells. Note that the PCell of the MCG 201M and the PSCell of the SCG 201 S may be referred to as special cells (SPCells).

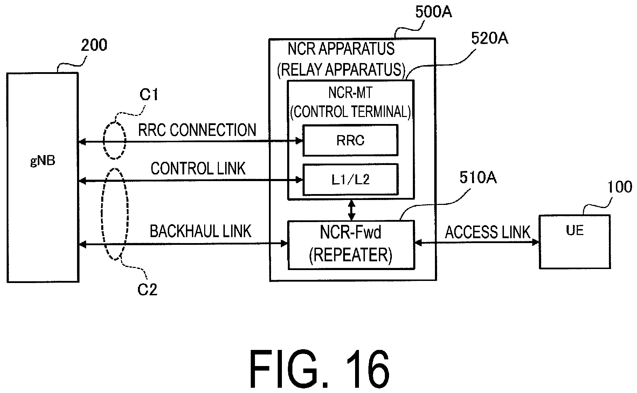

(1.10) Operation of Relay Apparatus Using Multiple Serving Cells An operation of a relay apparatus (NCR apparatus 500A) using multiple serving cells will be described. FIG. 16 is a diagram illustrating a configuration example when the CA is configured for the NCR apparatus 500A (NCR-MT 520A).

In the embodiment, a frequency for the control link (i.e., the radio link between the NCR-MT 520A and the gNB 200) is the same as a frequency for the backhaul link (i.e., the radio link between the NCR-Fwd 510A and the gNB 200). The frequency is also referred to as a "predetermined frequency". This allows channel states to be aligned in the control link and the backhaul link to achieve simplification of control of the NCR-Fwd 510A. For example, based on channel state information (CSI) feedback transmitted from the NCR-Fwd 510A to the gNB 200, the gNB 200 can recognize the channel state of the backhaul link and perform appropriate beamforming and link adaptation (such as determination of MCS) for the backhaul link.

Therefore, when configuring multiple serving cells for the NCR apparatus 500A (NCR-MT 520A), the gNB 200 configures a cell C2 corresponding to the frequencies of the radio signals (from another viewpoint, component carriers) relayed by the NCR-Fwd 510A for the NCR apparatus 500A (NCR-MT 520A). The frequencies are also referred to as "operating frequencies for the NCR-Fwd 510A". The serving cell C2 is used for the control link and the backhaul link. The NCR-MT 520A communicates in the layer-1 and/or the layer-2 (L1/L2) with the gNB 200 via the control link.

Here, the frequencies of the serving cell C2 may be frequencies in a millimeter wave band (also referred to as the "FR (Frequency Range) 2"). In such a high frequency band, stable wireless communication is difficult to realize. Therefore, in the embodiment, by configuring a serving cell C1 corresponding to frequencies different from the serving cell C2 for the NCR apparatus 500A (NCR-MT 520A), the connection of the RRC belonging to the layer-3 (L3) can be provided at different frequencies. Thereby, the control link and the RRC connection can be separated. The frequencies of the serving cell C1 may be lower than the frequencies of the serving cell C2, for example, frequencies in the Sub-6 band (also referred to as the "FR1"). In the embodiment, the serving cell C1 is a primary cell and the serving cell C2 is a secondary cell. This can stabilize the RRC connection of the NCR-MT 520A and achieve simplification of control of the NCR-Fwd 510A.

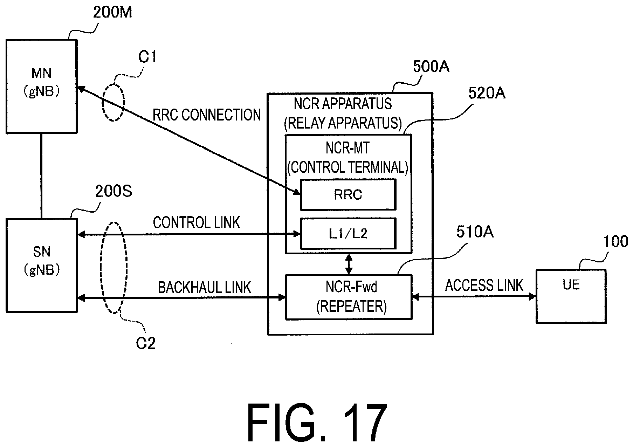

FIG. 17 is a diagram illustrating a configuration example when the DC is configured for the NCR apparatus 500A (NCR-MT 520A).

For the DC, the serving cell C1 is provided for the MN (gNB) 200M and the serving cell C2 is provided for the SN (gNB) 200S. For example, the serving cell C1 is a primary cell belonging to the MCG 201M of the MN 200M. The serving cell C2 is a secondary cell belonging to the SCG 201S of the SN 200S.

In this way, in the embodiment, the NCR-Fwd 510A relays a radio signal having the predetermined frequency transmitted between the gNB 200 and the UE 100. The NCR-MT 520A controls the NCR-Fwd 510A by performing wireless communication with the gNB 200. The NCR-MT 520A is configured with multiple serving cells including the cell C1 corresponding to the predetermined frequency by the gNB 200. This allows channel states to be aligned in the control link and the backhaul link to achieve simplification of control of the NCR-Fwd 510A. In the embodiment, the cell C2 corresponding to the predetermined frequency is a secondary cell. Note that the secondary cell may be a primary secondary cell (PSCell) in the DC.

The secondary cell at a time when being configured may be inactive (i.e., not used for communication). The NCR-MT 520A configured with the secondary cell may receive an activation indication for activating the secondary cell from the gNB 200. The NCR-MT 520A may activate the operation of the NCR-Fwd 510A, that is, make the NCR-Fwd 510A available for relaying, in response to receiving the activation indication. Thus, while the secondary cell is in the inactive state, the operation of the NCR-Fwd 510A can also be in the inactive state, so that power consumption and unexpected interferences due to the NCR-Fwd 510A can be kept from occurring.

The NCR-MT 520A may receive a deactivation indication for deactivating the secondary cell from the gNB 200. The NCR-MT 520A may deactivate the operation of the NCR-Fwd 510A in response to receiving the activation indication.

For the DC, the MN 200M may transmit information relating to the NCR apparatus 500A to the SN 200S over a network interface (inter-base station interface). For example, the MN 200M may transmit information indicating SCG addition for the NCR apparatus 500A to the SN 200S upon SN addition. The MN 200M may transmit a cell ID (i.e., a cell identifier of the cell C2) associated with the NCR-Fwd 510A to the SN 200S. This makes it easy to achieve the operation as illustrated in FIG. 17.

In the embodiment, the primary cell is used for the RRC connection between the gNB 200 and the NCR-MT 520A. The secondary cell is used for the control link between the gNB 200 and the NCR-MT 520A. Thus, the frequencies can be different between the control link and the RRC connection (that is, the control link and the RRC connection can be separated).

The NCR-MT 520A may receive an RRC message including configuration information for configuring the secondary cell from the gNB 200. The configuration information may include information for associating the secondary cell with the NCR-Fwd 510A. Thereby, for example, even when the NCR apparatus 500A includes multiple NCR-Fwds 510A, the NCR-Fwd 510A to be associated with the secondary cell can be explicitly designated.

The NCR-MT 520A may receive a control signal (i.e., the above-mentioned NCR control signal) for controlling the NCR-Fwd 510A from the gNB 200 via the control link. The NCR control signal may include identification information for identifying the NCR-Fwd 510A. Thereby, for example, even when the NCR apparatus 500A includes multiple NCR-Fwds 510A, the NCR-Fwd 510A to be controlled can be explicitly designated.

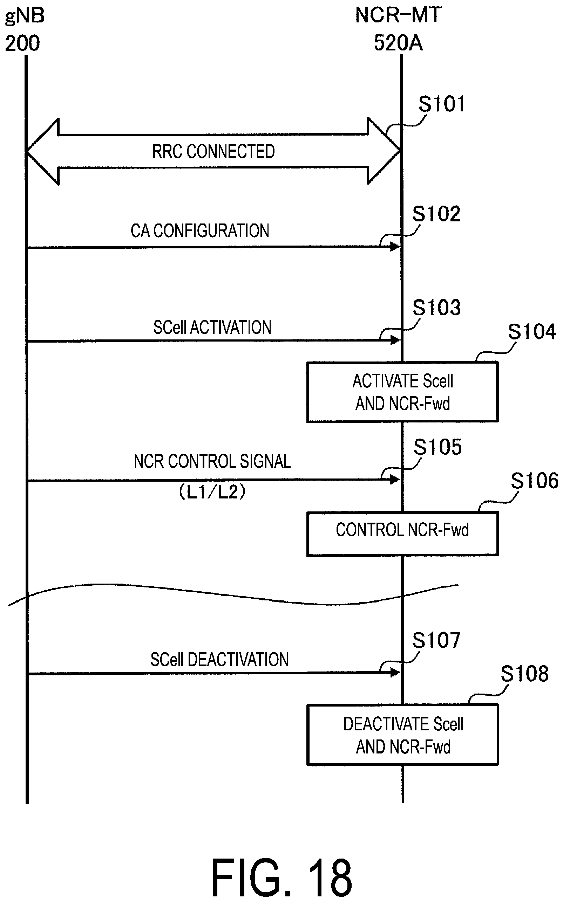

(1.10.1) First Operation Example Using Multiple Serving Cells for Relay Apparatus FIG. 18 is a diagram illustrating a first operation example in which multiple serving cells by way of the CA are used for the NCR apparatus 500A.

In step S101, the NCR-MT 520A establishes an RRC connection to the gNB 200 and is brought into an RRC connected state. The primary cell (serving cell C1) for the gNB 200 is allocated to the NCR-MT 520A. Note that the NCR-MT 520A may transmit the above-described NCR capability information to the gNB 200. The NCR capability information may include information indicating that control of NCR-Fwd 510A by the secondary cell is supported.

In step S102, the gNB 200 performs CA configuration for the NCR-MT 520A. For example, the gNB 200 transmits an RRC message (e.g., an RRC Reconfiguration message) including CA configuration information to the NCR-MT 520A over the primary cell (serving cell C1). The NCR-MT 520A receives the CA configuration information. The CA configuration information includes information for associating the secondary cell (serving cell C2) configured for the NCR-MT 520A with the NCR-Fwd 510A. For example, the CA configuration information may include a list of at least one set of the identifier of the secondary cell (serving cell C2) and the identifier of the NCR-Fwd 510A. The CA configuration information may include information indicating in which secondary cell (serving cell C2) the NCR-MT 520A is controlled (i.e., the control link is established).

In step S103, the gNB 200 transmits an activation indication for the secondary cell to the NCR-MT 520A. For example, the gNB 200 transmits the MAC CE including the activation indication to the NCR-MT 520A over the primary cell (serving cell C1). The NCR-MT 520A receives the activation indication. The activation indication may include the identifier of the secondary cell to be activated.

In step S104, the NCR-MT 520A activates the secondary cell (serving cell C2) configured in step S102 in response to receiving the activation indication. The NCR-MT 520A may also activate the NCR-Fwd 510A. Once activating the secondary cell (serving cell C2), the NCR-MT 520A starts beam selection and CSI feedback in the secondary cell (serving cell C2). Note that the activation indication for the secondary cell and the activation indication for the NCR-Fwd 510A may be different signaling. In this case, the NCR-MT 520A may activate the secondary cell when receiving the activation indication for the secondary cell, and may activate the NCR-Fwd 510A when receiving the activation indication for the NCR-Fwd 510A.

In step S105, the gNB 200 transmits an NCR control signal (L1/L2 signal) over the control link to the NCR-MT 520A in the secondary cell (serving cell C2). The NCR-MT 520A receives the NCR control signal (L1/L2 signal). The NCR control signal may include the identifier of the NCR-Fwd 510A.

In step S106, the NCR-MT 520A controls the NCR-Fwd 510A according to the NCR control signal received in step S105.

Then, in step S107, the gNB 200 transmits a deactivation indication for the secondary cell to the NCR-MT 520A. For example, the gNB 200 transmits the MAC CE including the deactivation indication to the NCR-MT 520A over the primary cell (serving cell C1) or the secondary cell (serving cell C2). The NCR-MT 520A receives the deactivation indication. The deactivation indication may include the identifier of the secondary cell to be deactivated.

In step S108, the NCR-MT 520A deactivates the secondary cell (serving cell C2) activated in step S104 in response to receiving the deactivation indication. The NCR-MT 520A may deactivate the NCR-Fwd 510A. Once deactivating the secondary cell (serving cell C2), the NCR-MT 520A ends beam selection and CSI feedback in the secondary cell (serving cell C2). Note that the deactivation indication for the secondary cell and the deactivation indication for the NCR-Fwd 510A may be different signaling. In this case, the NCR-MT 520A may deactivate the secondary cell when receiving the deactivation indication for the secondary cell, and may deactivate the NCR-Fwd 510A when receiving the deactivation indication for the NCR-Fwd 510A.

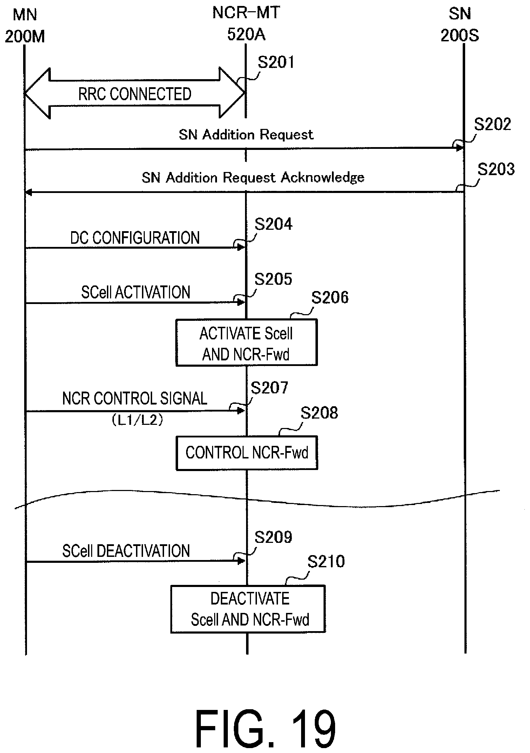

FIG. 19 is a diagram illustrating a first operation example in which multiple serving cells by way of the DC are used for the NCR apparatus 500A. Overlapping description of operations same as and/or similar to those for the CA described above will be omitted.

In step S201, the NCR-MT 520A establishes an RRC connection to the MN 200M (gNB 200) and is brought into an RRC connected state. The primary cell (serving cell C1) for the MN 200M is allocated to the NCR-MT 520A. Note that the NCR-MT 520A may transmit the above-described NCR capability information to the gNB 200. The NCR capability information may include information indicating that control of NCR-Fwd 510A by the secondary cell is supported. Prior to step S202, an SN Addition Required message may be transmitted from the SN 200S to the MN 200M to request that the SN addition is required. The message may include information indicating that addition of an NCR is requested. The MN 200M may perform the step S202 in response to receiving the message.

In step S202, the MN 200M transmits an SN Addition Request message to the SN 200S over the inter-base station interface. The SN 200S receives the SN Addition Request message. The SN Addition Request message may include information indicating SCG addition for control of the NCR apparatus 500A. The SN Addition Request message may include information for associating the NCR-Fwd 510A with the secondary cell. For example, the SN Addition Request message may include a list including the identifier of the NCR-Fwd 510A, the identifier of the NCR apparatus 500A, and/or at least one set of the identifier of the NCR-MT 520A and the cell ID. The SN Addition Request message may include a list including the identifier of the NCR-Fwd 510A, the identifier of the NCR apparatus 500A, and/or at least one set of the identifier of the NCR-MT 520A and an identifier of the frequency.

In step S203, the SN 200S transmits an SN Addition Request Acknowledge message including an RRC Reconfiguration (RRC container) to be transmitted to the NCR-MT 520A to the MN 200M over the inter-base station interface. The MN 200M receives the SN Addition Request Acknowledge message. The RRC Reconfiguration (RRC container) includes DC configuration information. The DC configuration information includes information for associating the secondary cell (serving cell C2) configured for the NCR-MT 520A with the NCR-Fwd 510A. For example, the DC configuration information may include a list of at least one set of the identifier of the secondary cell (serving cell C2) and the identifier of the NCR-Fwd 510A. The DC configuration information may include information indicating in which secondary cell (serving cell C2) the NCR-MT 520A is controlled (i.e., the control link is established). The DC configuration information may include information indicating the operating frequencies for the NCR-Fwd 510A.

In step S204, the MN 200M transmits the RRC Reconfiguration (DC configuration information) included in the SN Addition Request Acknowledge message received in step S203 to the NCR-MT 520A.

The operations in steps S205 to S210 are the same as and/or similar to the operations in steps S103 to S108 of FIG. 18. However, the activation indication/deactivation indication for the secondary cell may be transmitted from the SN 200S to the NCR-MT 520A. Note that prior to step S205 or S209, the SN 200S may transmit a message requesting activation or deactivation of the NCR to the MN 200M. The MN 200M may perform step S205 or S209 in response to receiving the message. The SN 200S may request the MN 200M to remove the NCR configuration. The MN 200M, upon receiving the request, may transmit an SN Removal Request message to the SN 200S. The message may be a message for removing the configuration for the NCR apparatus 500A. For example, the message may be a message for removing the configuration for the NCR-Fwd 510A.

### (1.10.2) Second Operation Example Using Multiple Serving Cells for Relay Apparatus

This operation example is an operation example related to a deactivation timer (also referred to as "sCellDeactivationTimer") for a secondary cell. The sCellDeactivationTimer is a timer configured by the gNB 200 for the UE 100 in association with the secondary cell. The sCellDeactivationTimer is a timer for deactivating the secondary cell in response to a time period without data communication in the secondary cell continuing for the predetermined period, and is used for measuring the predetermined period. This allows for spontaneous deactivation of unused secondary cells.

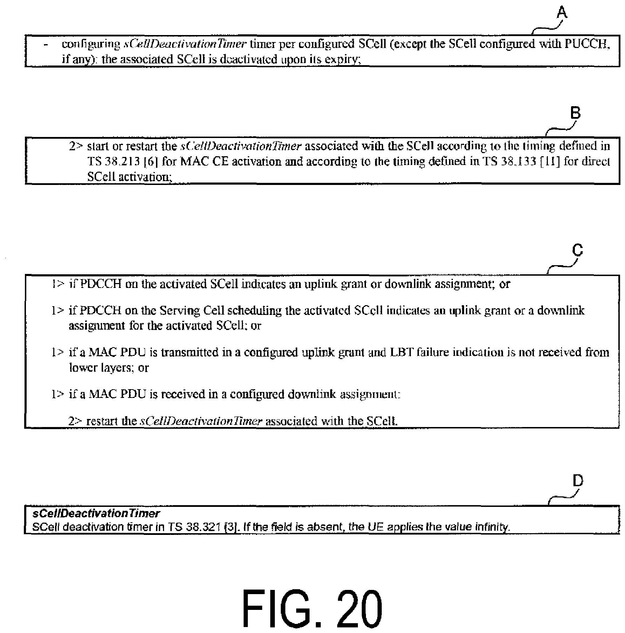

FIG. 20 is a diagram for describing the sCellDeactivationTimer. In FIG. 20, "A" to "C" indicate the description contents of the 3GPP technical specifications "TS38.321" (i.e., MAC protocol specifications), and "D" in FIG. 20 indicates the description contents of the 3GPP technical specifications "TS38.331" (i.e., RRC protocol specifications).

As illustrated in "A" in FIG. 20, the UE 100 configured with the sCellDeactivationTimer deactivates the secondary cell (SCell) associated with the sCellDeactivationTimer in response to the sCellDeactivationTimer expiring. Note that the sCellDeactivationTimer can be configured individually for each secondary cell (SCell).

As illustrated in "B" in FIG. 20, the UE 100 configured with the sCellDeactivationTimer starts or restarts the sCellDeactivationTimer in response to the secondary cell (SCell) associated with the sCellDeactivationTimer being activated.

As illustrated in "C" in FIG. 20, the UE 100 configured with the sCellDeactivationTimer restarts the sCellDeactivationTimer in response to receiving DCI for resource allocation, to be more specific, DL assignment or UL grant on the PDCCH of the secondary cell (SCell) associated with the sCellDeactivationTimer or the PDCCH of the serving cell that schedules the secondary cell (SCell). The UE 100 restarts the sCellDeactivationTimer in response to receiving or transmitting data (MAC PDU) on the downlink or uplink resource allocated in advance by way of a configured grant.

As illustrated in "D" in FIG. 20, when the sCellDeactivationTimer is not configured for the secondary cell, the UE 100 applies infinity as the timer value of the sCellDeactivationTimer for the secondary cell.

On the assumption of the operation in FIG. 20, when the NCR-MT 520A is controlled in the secondary cell (serving cell C2), that is, when a control link for the NCR-MT 520A is provided in the secondary cell (serving cell C2), the following problem occurs. To be more specific, the sCellDeactivationTimer being configured for the secondary cell (serving cell C2) may cause the secondary cell (serving cell C2) to be deactivated when the sCellDeactivationTimer expires. For example, when the NCR control signal received over the control link is a MAC CE, or when the NCR control signal received over the control link is non-scheduling DCI, the NCR-MT 520A is considered to not restart the sCellDeactivationTimer in response to receiving the NCR control signal. Therefore, the secondary cell (serving cell C2) may be disadvantageously deactivated to interrupt control of the NCR apparatus 500A (NCR-MT 520A).

For this reason, the gNB 200 that configures the secondary cell (serving cell C2) associated with the NCR-Fwd 510A for the NCR-MT 520A does not configure the sCellDeactivationTimer for the secondary cell. That is, the gNB 200 avoids configuring the SCell deactivation timer for the secondary cell forming the control link for the NCR-Fwd 510A (configuring the sCellDeactivationTimer for the secondary cell is not allowed). As a result, the NCR-MT 520A applies an infinite value as the timer value of the sCellDeactivationTimer, thus keeping the secondary cell (serving cell C2) from being deactivated due to the sCellDeactivationTimer.

When the secondary cell forming the control link for the NCR-Fwd 510A is configured with the sCellDeactivationTimer, the NCR-MT 520A may ignore the timer value of the sCellDeactivationTimer (i.e., the configured sCellDeactivationTimer) and apply an infinite value as the timer value of the sCellDeactivationTimer. This can keep the secondary cell (serving cell C2) from being deactivated due to the sCellDeactivationTimer.

(1.10.3) Third Operation Example Using Multiple Serving Cells for Relay Apparatus This operation example is a variation of the above-described second operation example. In this operation example, the NCR-MT 520A restarts the sCellDeactivationTimer in response to receiving the NCR control signal for controlling the NCR-Fwd 510A from the gNB 200 via the control link for the secondary cell (serving cell C2). This can keep the secondary cell (serving cell C2) from being deactivated due to the sCellDeactivationTimer.

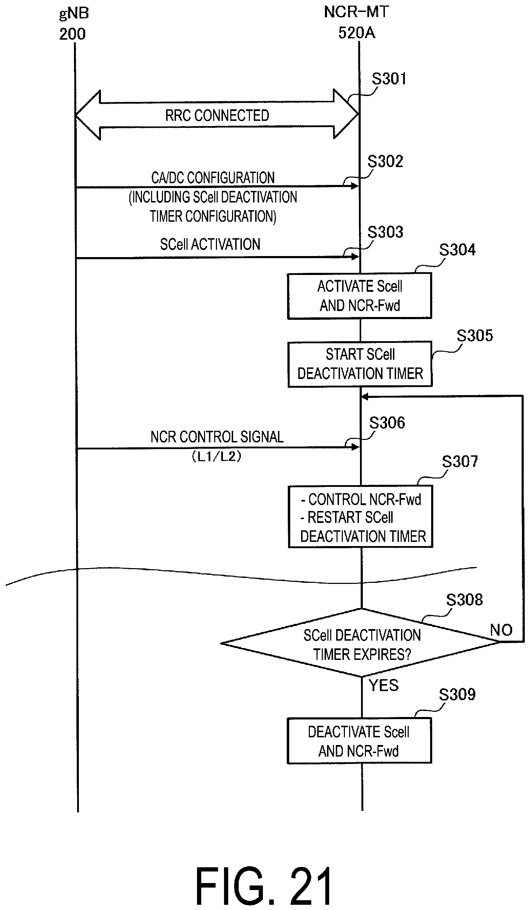

FIG. 21 is a diagram illustrating this operation example. Overlapping description of operations same as and/or similar to those in the first and second operation examples described above will be omitted.

In step S301, the NCR-MT 520A establishes an RRC connection to the gNB 200 and is brought into an RRC connected state. The primary cell (serving cell C1) for the MN 200M is allocated to the NCR-MT 520A.

In step S302, the gNB 200 performs CA configuration or DC configuration for the NCR-MT 520A. Here, the gNB 200 configures a secondary cell (serving cell C2) for controlling the NCR-Fwd 510A for the NCR-MT 520A. The configuration includes a configuration timer value of the sCellDeactivationTimer. The configuration may include information for designating whether to restart the sCellDeactivationTimer when the NCR control signal (L1/L2 signal), in particular, the DCI for NCR control is received. The information may include the cell ID of the secondary cell (serving cell C2) and/or the identifier of the NCR-Fwd 510A.

In step S303, the gNB 200 transmits an activation indication for the secondary cell (serving cell C2) to the NCR-MT 520A.

In step S304, the NCR-MT 520A (or NCR apparatus 500A) activates the secondary cell (serving cell C2) and the NCR-Fwd 510A in response to receiving the activation indication. The NCR-MT 520A starts the sCellDeactivationTimer configured for the secondary cell (serving cell C2) in step S302.

In step S306, the gNB 200 transmits an NCR control signal (L1/L2 signal) over the control link to the NCR-MT 520A in the secondary cell (serving cell C2).

In step S307, the NCR-MT 520A controls the NCR-Fwd 510A according to the NCR control signal. The NCR-MT 520A, in response to receiving the NCR control signal (L1/L2 signal), restarts the sCellDeactivationTimer configured for the secondary cell (serving cell C2) in step S302.

Thereafter, when the sCellDeactivationTimer expires (step S308: YES), the NCR-MT 520A deactivates the secondary cell (serving cell C2). The NCR-MT 520A (or NCR apparatus 500A) may deactivate the corresponding NCR-Fwd 510A.

### (1.10.4) Fourth Operation Example Using Multiple Serving Cells for Relay Apparatus

In this operation example, the NCR-MT 520A detects that a failure has occurred in the control link (i.e., the secondary cell). The NCR-MT 520A transmits information relating to the detected failure to the gNB 200 over the primary cell. This allows the gNB 200 to recognize that the failure has occurred in the control link.

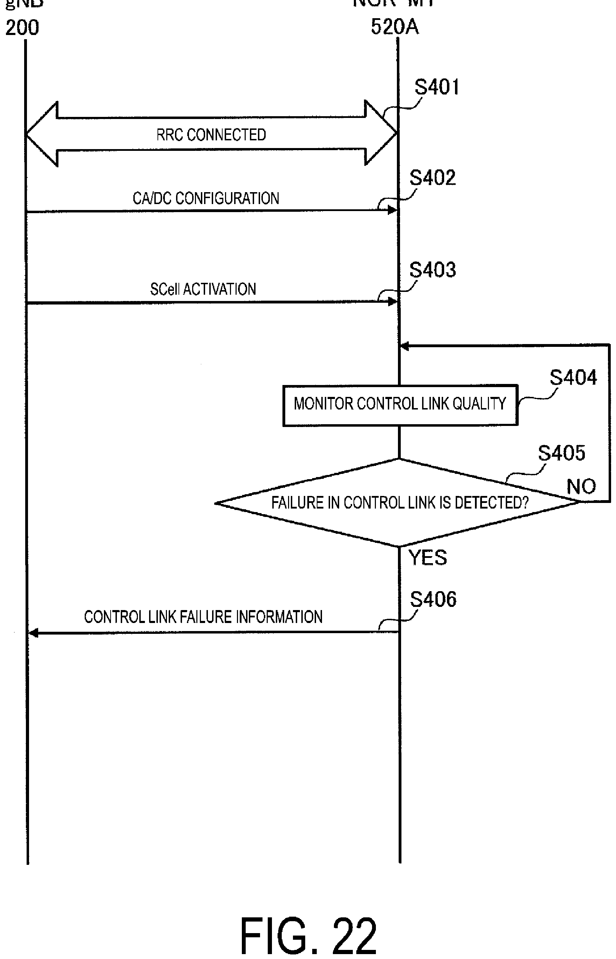

FIG. 22 is a diagram illustrating this operation example. Overlapping description of operations same as and/or similar to those in the first to third operation examples described above will be omitted.

In step S401, the NCR-MT 520A establishes an RRC connection to the gNB 200 and is brought into an RRC connected state. The primary cell (serving cell C1) for the MN 200M is allocated to the NCR-MT 520A.

In step S402, the gNB 200 performs CA configuration or DC configuration for the NCR-MT 520A. The configuration may include a configuration related to monitoring of the control link (e.g., a threshold for the quality of the control link). Here, the gNB 200 configures a secondary cell (serving cell C2) for controlling the NCR-Fwd 510A for the NCR-MT 520A.

In step S403, the gNB 200 transmits an activation indication for the secondary cell (serving cell C2) to the NCR-MT 520A. The NCR-MT 520A activates the secondary cell (serving cell C2) and the NCR-Fwd 510A in response to receiving the activation indication.

In step S404, the NCR-MT 520A monitors reception qualities of reference signals (SSB and/or CSI-RS) received over the control link. The NCR-MT 520A may perform the monitoring only when configured by the gNB 200. The reception quality may be RSRP/RSRQ/SINR of the control link.

In step S405, the NCR-MT 520A determines whether a failure in the control link is detected. The NCR-MT 520A may determine whether a failure corresponding to a radio link failure (RLF) has occurred in the control link. The NCR-MT 520A may determine that a failure has occurred when the measured reception quality is below a threshold. The threshold may be configured from the gNB 200.

When the failure in the control link is determined to be detected (step S405: YES), in step S406, the NCR-MT 520A notifies the gNB 200 of failure information of the control link over the primary cell. For example, the NCR-MT 520A transmits an RRC message, e.g., an NCR Failure Information message, to the gNB 200. The gNB 200 receives the message. The message may include the identifier of the NCR-Fwd 510A corresponding to the failed control link, the identifier of the secondary cell, and/or the information of the failed frequency.

### (1.11) Operation for Failure Handling by Relay Apparatus

An operation for failure handling by the NCR apparatus 500A according to the embodiment is described. In the following embodiment, multiple serving cells may not need to be configured for the NCR apparatus 500A. Multiple serving cells may be configured for the NCR apparatus 500A.

The NCR-Fwd 510A relays a radio signal transmitted and received between the gNB 200 and the UE 100 as described above. The NCR-MT 520A controls the NCR-Fwd 510A by performing wireless communication with the gNB 200 via the control link. Here, the NCR-MT 520A performs predetermined control corresponding to the failure in response to detecting the occurrence of the failure in the control link or the NCR-Fwd 510A. When multiple serving cells are configured for the NCR apparatus 500A as described above, the NCR-MT 520A may transmit the failure information of the control link or the failure information of the NCR-Fwd 510A to the gNB 200 over the primary cell.

### (1.11.1) First Operation Example for Fault Handling

In this operation example, the NCR-MT 520A detects that a failure has occurred in the control link. The NCR-MT 520A stops the operation of the NCR-Fwd 510A in response to the occurrence of the failure in the control link. When a failure occurs in the control link, the NCR-Fwd 510A operating in an uncontrolled state may cause a problem such as an interference to occur. Therefore, stopping of the operation of the NCR-Fwd 510A can keep such a problem from occurring. Note that the NCR-MT 520A may detect that the failure in the control link has been resolved. The NCR-MT 520A may transmit a notification to the gNB 200 in response to the failure being resolved.

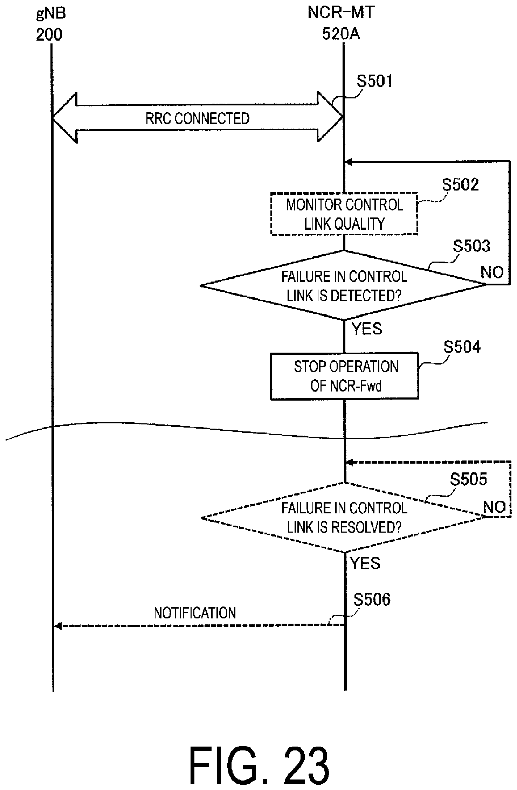

FIG. 23 is a diagram illustrating this operation example. Overlapping description of operations same as and/or similar to those of the embodiment described above will be omitted.

In step S501, the NCR-MT 520A establishes an RRC connection to the gNB 200 and is brought into an RRC connected state. The gNB 200 may transmit an NCR control signal (L1/L2 signal) over the control link to the NCR-MT 520A. The NCR-MT 520A controls the NCR-Fwd 510A according to the NCR control signal.

In step S502, the NCR-MT 520A may monitor reception qualities of reference signals (SSB and/or CSI-RS) received over the control link. The NCR-MT 520A may perform the monitoring only when configured by the gNB 200. The reception quality may be RSRP/RSRQ/SINR of the control link.

In step S503, the NCR-MT 520A determines whether a failure in the control link is detected. The NCR-MT 520A may determine whether a failure corresponding to a radio link failure (RLF) has occurred in the control link. The NCR-MT 520A may determine that a failure has occurred when the measured reception quality is below a threshold. The threshold may be configured from the gNB 200.

For example, the NCR-MT 520A may determine that a failure in the control link is detected when any one of the following events occurs:
- Occurrence of a failure corresponding to an RLF in the control link;
- Occurrence of an RLF in the primary cell;
- Starting of RRC Reestablishment;
- Transmission of MCG Failure Information related to a failure of the MCG to the gNB 200;
- Transmission of SCG Failure Information related to a failure of the SCG to the gNB 200;
- Transition to the RRC idle state or the RRC inactive state (for example, RRC Reestablishment is failed); and
- Being connected to a cell other than the current serving cell.

When a failure in the control link is determined to be detected (step S503: YES), in step S504, the NCR-MT 520A (or NCR apparatus 500A) stops the operation of the NCR-Fwd 510A (i.e., the relay operation of the radio signal).

Then, in step S505, the NCR-MT 520A may determine whether the failure in the control link has been resolved (returned to normal).

When the failure in the control link is determined to have been resolved (step S505: YES), in step S506, the NCR-MT 520A may transmit a notification indicating that the operation of the NCR-Fwd 510A is being stopped to the gNB 200. The gNB 200 may perform configuration and control on the NCR apparatus 500A again in response to receiving the notification. The gNB 200 may control the NCR apparatus 500A to restore the previous configuration and control state (i.e., to reactivate the NCR-Fwd 510A).

### (1.11.2) Second Operation Example for Failure Handling

In this operation example, the gNB 200 configures the content of the predetermined control for the NCR-Fwd 510A (i.e., the control when a failure occurs) for the NCR-MT 520A. The NCR-MT 520A detects that a failure has occurred in the control link. The NCR-MT 520A performs the control of the content configured by the gNB 200 on the NCR-Fwd 510A in response to the occurrence of the failure in the control link.

For example, there may be a control method in which the operation of the NCR-Fwd 510A is continued even when a failure occurs in the control link when the gNB 200 configures the NCR apparatus 500A to periodically perform a predetermined operation. Therefore, the gNB 200 may configure for the NCR-Fwd 510A whether to continue the operation of the NCR-MT 520A when a failure occurs in the control link.

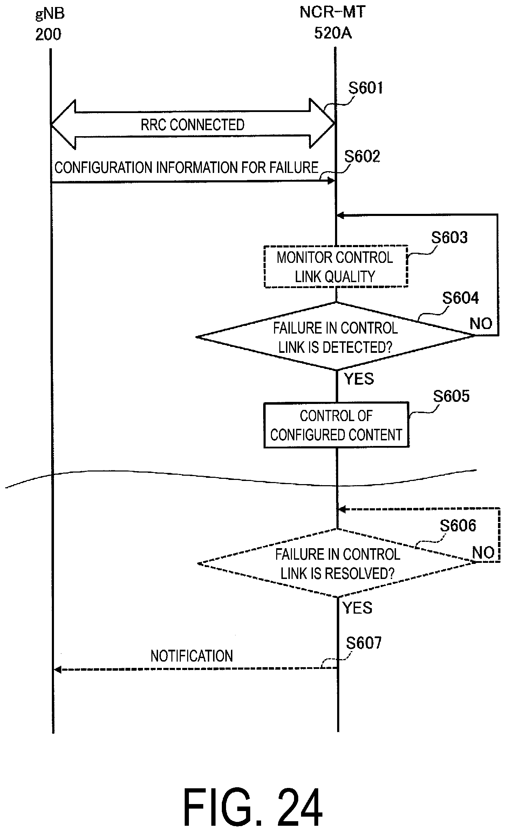

FIG. 24 is a diagram illustrating this operation example. Overlapping description of operations same as and/or similar to those of the embodiment described above will be omitted.

In step S601, the NCR-MT 520A establishes an RRC connection to the gNB 200 and is brought into an RRC connected state.

In step S602, the gNB 200 transmits to the NCR-MT 520A the configuration information indicating the content of control for the NCR-Fwd 510A upon occurrence of the failure in the control link. The gNB 200 may transmit an RRC message (e.g., RRC Reconfiguration message) including the configuration information to the NCR-MT 520A. The NCR-MT 520A receives the configuration information. The gNB 200 may transmit an NCR control signal (L1/L2 signal) over the control link to the NCR-MT 520A. The NCR-MT 520A controls the NCR-Fwd 510A according to the NCR control signal.

The configuration information in the step S602 may include information, as the content of control upon occurrence of the failure in the control link, for designating any one of stopping the operation of the NCR-Fwd 510A, canceling the configuration of the NCR-Fwd 510A, and continuing the operation of the NCR-Fwd 510A. When continuing the operation of NCR-Fwd 510A, the configuration information may include an NCR control signal indicating a beamforming method or the like upon occurrence of the failure in the control link.

In step S603, the NCR-MT 520A may monitor reception qualities of reference signals (SSB and/or CSI-RS) received over the control link.

In step S604, the NCR-MT 520A determines whether a failure in the control link is detected according to the above-described method.

When a failure in the control link is determined to be detected (step S604: YES), in step S605, the NCR-MT 520A performs the control configured in step S602 on the NCR-Fwd 510A. For example, the NCR-MT 520A (or NCR apparatus 500A) may continue the operation of the NCR-Fwd 510A in accordance with the contents which have already been configured and controlled. The NCR-MT 520A may continue the operation of the NCR-Fwd 510A according to the NCR control signal configured in step S602.

The operations in steps S606 to S607 are the same as or similar to those of the embodiment described above.

### (1.11.3) Third Operation Example for Fault Handling

In this operation example, the NCR-MT 520A detects that a failure has occurred in the NCR-Fwd 510A (for example, the NCR-Fwd 510A is failed). The NCR-MT 520A transmits failure information of the NCR-Fwd 510A to the gNB 200 in response to the occurrence of the failure in the NCR-Fwd 510A.

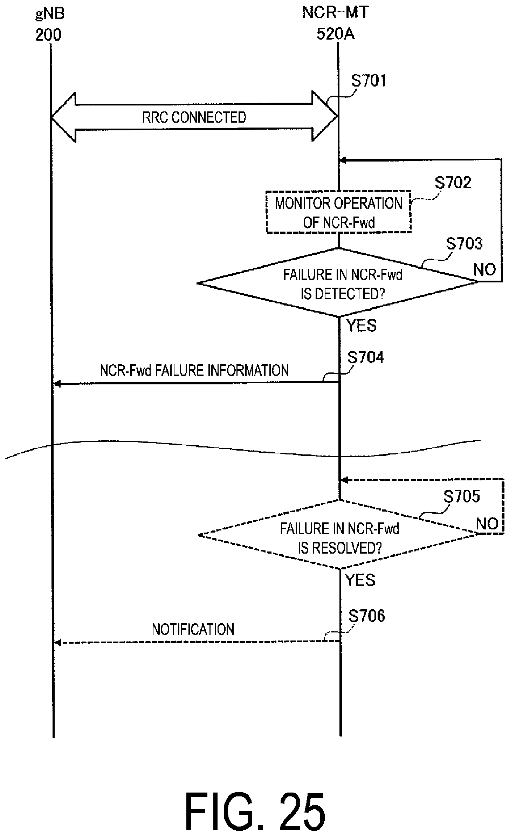

FIG. 25 is a diagram illustrating this operation example. Overlapping description of operations same as and/or similar to those of the embodiment described above will be omitted.

In step S701, the NCR-MT 520A establishes an RRC connection to the gNB 200 and is brought into an RRC connected state. The gNB 200 may perform configuration related to monitoring the NCR-Fwd 510A for the NCR-MT 520A. The gNB 200 may transmit an NCR control signal (L1/L2 signal) over the control link to the NCR-MT 520A. The NCR-MT 520A controls the NCR-Fwd 510A according to the NCR control signal.

In step S702, the NCR-MT 520A may monitor the operation of the NCR-Fwd 510A. For example, the NCR-MT 520A may monitor at least one selected from the group consisting of a load state, a control delay time (control response time), and a heating value of the NCR-Fwd 510A.

In step S703, the NCR-MT 520A determines whether a failure in the NCR-Fwd 510A is detected. For example, the NCR-MT 520A may determine that a failure in the control link is detected when any one of the following events occurs:
- Occurrence of a failure in the NCR-Fwd 510A;
- The NCR-Fwd 510A processing having not caught up with the configuration and control from the of the gNB 200, for example, the NCR-Fwd 510A control could not be performed in response to an NCR control signal from gNB 200;
- The load on the NCR-Fwd 510A (e.g., usage of hardware resources) having risen above thresholds, note that the threshold may be configure from the gNB 200;
- A failure having occurred in the control link; and
- An incorrect control value being received in an NCR control signal (L1/L2 signal) and/or an RRC Reconfiguration message from the gNB 200, for example, a control value (weight or the like) not supported by the NCR-Fwd 510A being received may correspond.

When a failure in the NCR-Fwd 510A is determined to be detected (step S703: YES), in step S704, the NCR-MT 520A transmits failure information related to the detected failure to the gNB 200. The gNB 200 desires the failure information. For example, the NCR-MT 520A may transmit an RRC message including the failure information, for example, a message such as NCR Failure Information or a UE Assistance Information message to the gNB 200.

The configuration message may include at least one selected from the group consisting of the information elements below.
- An information element indicating occurrence of a failure in the NCR-Fwd 510A;
- An information element indicating a processing delay, load rise or overheating of the NCR-Fwd 510A;
- An information element indicating occurrence of a failure in the control link;
- Desired configuration and control values for the NCR-Fwd 510A, for example, a preference value of an upper limit of the number of antennas and/or an upper limit of the frequency bandwidth to be controlled may be included, the gNB 200 may change the configuration and control for the NCR apparatus 500A according to the desired configuration and control values; and
- The identifier of the NCR-Fwd 510A when the failure has occurred.

The gNB 200 receiving the failure information in step S704 may transmit, to the NCR-MT 520A, information, as the content of control in the failure handling, for designating any one of stopping the operation of the NCR-Fwd 510A, canceling the configuration of the NCR-Fwd 510A, and continuing the operation of the NCR-Fwd 510A.

Then, in step S705, the NCR-MT 520A may determine whether the failure in the NCR-Fwd 510A has been resolved (returned to normal).

When the failure in the NCR-Fwd 510A is determined to have been resolved (step S705: YES), in step S706, the NCR-MT 520A may transmit a notification indicating that the failure in the NCR-Fwd 510A has been resolved to the gNB 200. The notification may include an identifier of the NCR-Fwd 510A in which the failure is resolved.

### (2) Second Embodiment

With respect to a second embodiment, differences from the first embodiment described above are mainly described. The overview of a mobile communication system 1 and the configuration of a gNB 200 according to the second embodiment each are the same as and/or similar to those of the first embodiment described above.

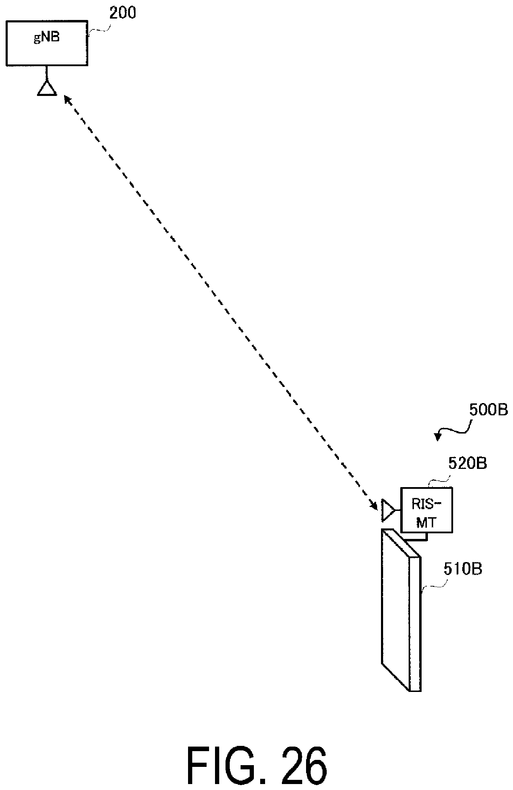

As illustrated in FIG. 26, a relay apparatus according to the second embodiment is a Reconfigurable Intelligent Surface (RIS) apparatus 500B configured to change a propagation direction of an incident radio wave (radio signal) by reflection or refraction. The "NCR" in the first and second embodiments described above may be interpreted as the "RIS".

The RIS is a type of a repeater (hereinafter, also referred to as a "RIS-Fwd") capable of performing beamforming (directivity control) in the same and/or similar way as the NCR by changing the characteristics of metamaterials. The RIS may be able to change a range (distance) of a beam by controlling a reflection direction and/or a refraction direction of each unit element. For example, the RIS may have a configuration capable of controlling the reflection direction and/or refraction direction of each unit element, and focusing on a near UE (directing a beam) or focusing on a far UE (directing a beam).

The RIS apparatus 500B includes a new UE (hereinafter referred to as "RIS-MT") 520B which is a control terminal for controlling the RIS-Fwd 510B. The RIS-MT 520B controls the RIS-Fwd 510B in cooperation with the gNB 200 by establishing a radio connection to the gNB 200 and performing wireless communication with the gNB 200. The RIS-Fwd 510B may be a reflective RIS. Such a RIS-Fwd 510B reflects an incident radio wave to change the propagation direction of the radio wave. Here, a reflection angle of the radio wave can be variably configured. The RIS-Fwd 510B reflects a radio wave incident from the gNB 200 toward the UE 100. The RIS-Fwd 510B may be a transmissive RIS. Such a RIS-Fwd 510B refracts an incident radio wave to change the propagation direction of the radio wave. Here, a refraction angle of the radio wave can be variably configured.

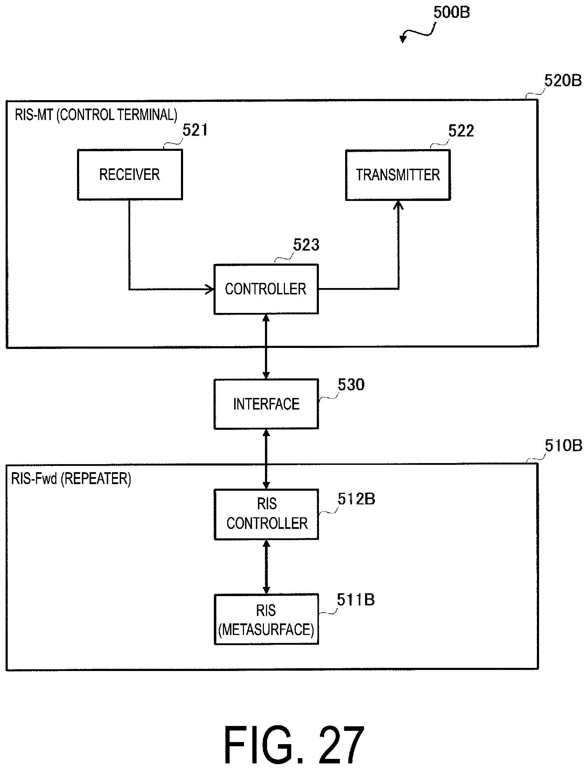

FIG. 27 is a diagram illustrating a configurations example of the RIS-Fwd (repeater) 510B and the RIS-MT (control terminal) 520B according to the second embodiment. The RIS-MT 520B includes a receiver 521, a transmitter 522, and a controller 523. Such a configuration is the same as and/or similar to that in the first embodiment described above. The RIS-Fwd 510B includes a RIS 511B and a RIS controller 512B. The RIS 511B is a metasurface configured using metamaterials. For example, the RIS 511B is configured by arranging very small structures in an array form with respect to a wavelength of a radio wave, in which a direction and/or beam shape of a reflected wave can be arbitrarily designed by forming the structures in different shapes depending on an arrangement location. The RIS 511B may be a transparent dynamic metasurface. The RIS 511B may be configured to include a transparent glass substrate stacked on a metasurface substrate on which a large number of small structures are regularly arranged and which is made transparent, and may be capable of dynamically controlling three patterns of a mode of transmitting an incident radio wave, a mode of transmitting a part of a radio wave and reflecting a part thereof, and a mode of reflecting all radio waves by minutely moving the stacked glass substrate. The RIS controller 512B controls the RIS 511B according to a RIS control signal from the controller 523 in the RIS-MT 520B. The RIS controller 512B may include at least one processor and at least one actuator. The processor interprets a RIS control signal from the controller 523 in the RIS-MT 520B to drive the actuator according to the RIS control signal.

### (3) Another Embodiments

In the above-described embodiments, an example in which the gNB 200 controls the NCR apparatus 500A has been described. However, the NCR apparatus 500A (NCR-MT 520A) may autonomously control the NCR-Fwd 510A based on the configuration from the gNB 200.

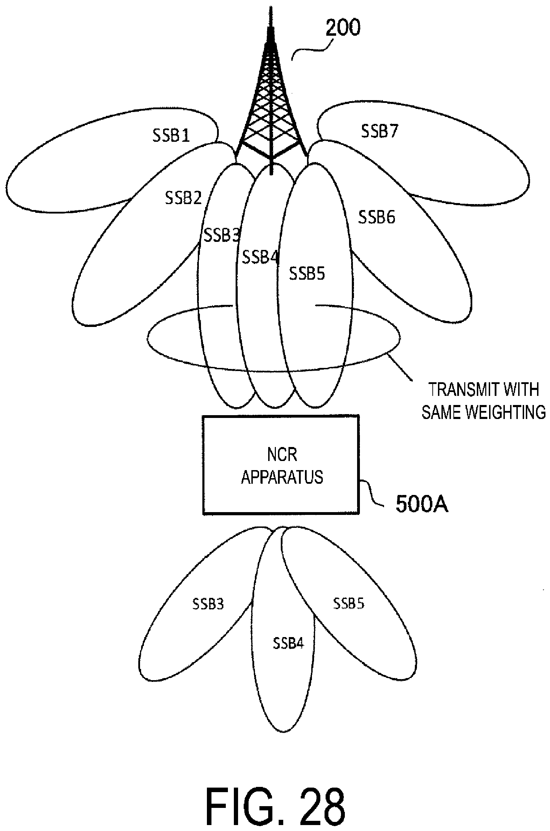

FIG. 28 is a diagram illustrating an example of beam sweeping according to another embodiment. The gNB 200 transmits multiple beams (beams of an SSB 3 to an SSB 5 in the illustrated example) with the same transmission weight in the direction of the NCR apparatus 500A for the backhaul link. The NCR apparatus 500A (NCR-Fwd 510A) autonomously transmits the multiple beams (beams of the SSB 3 to the SSB 5) with different transmission weights in different directions for the access link. Under such an assumption, the NCR apparatus 500A (NCR-MT 520A) may autonomously control the NCR-Fwd 510A based on the configuration from the gNB 200 upon when occurrence of a failure.

The operation flows described above can be separately and independently implemented, and also be implemented in combination of two or more of the operation flows. For example, some steps of one operation flow may be added to another operation flow or some steps of one operation flow may be replaced with some steps of another operation flow. In each flow, all steps may not be necessarily performed, and only some of the steps may be performed.

In the embodiment described above, an example in which the base station is an NR base station (i.e., a gNB) is described; however, the base station may be an LTE base station (i.e., an eNB). The base station may be a relay node such as an Integrated Access and Backhaul (IAB) node. The base station may be a Distributed Unit (DU) of the IAB node.

A program causing a computer to execute each of the processes performed by the UE 100 (NCR-MT 520A, RIS-MT 520B) or the gNB 200 may be provided. The program may be recorded on a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM. Circuits for executing processing performed by the UE 100 or the gNB 200 may be integrated, and at least a part of the UE 100 or the gNB 200 may be implemented as a semiconductor integrated circuit (chipset, System on a chip (SoC)).

The phrases "based on" and "depending on/in response to" used in the present disclosure do not mean "based only on" and "only depending on/in response to," unless specifically stated otherwise. The phrase "based on" means both "based only on" and "based at least in part on". The phrase "depending on" means both "only depending on" and "at least partially depending on". The terms "include", "comprise" and variations thereof do not mean "include only items stated" but instead mean "may include only items stated" or "may include not only the items stated but also other items". The term "or" used in the present disclosure is not intended to be "exclusive or". Further, any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

Embodiments have been described above in detail with reference to the drawings, but specific configurations are not limited to those described above, and various design variation can be made without departing from the gist of the present disclosure.

This application claims priority to Japanese Patent Application No. 2022-126137 (filed on August 8, 2022), the contents of which are incorporated herein by reference in their entirety.

### (4) Supplementary Note

Features relating to the embodiments described above are described below as supplements.

### Supplementary Note 1

A communication method using a relay apparatus in a mobile communication system including:
relaying, by a repeater included in the relay apparatus, a radio signal transmitted between a base station and a user equipment;
performing, by a control terminal included in the relay apparatus, control of the repeater by performing wireless communication with the base station via a control link;
detecting, by the control terminal, that a failure has occurred in the control link or the repeater; and
performing, by the control terminal, predetermined control in response to the failure.

### Supplementary Note 2

The communication method according to supplementary note 1, wherein the detecting includes detecting that a failure has occurred in the control link, and the performing of the predetermined control includes stopping an operation of the repeater in response to occurrence of the failure of the control link.

### Supplementary Note 3

The communication method according to supplementary note 1 or 2, further including: configuring, by the base station, content of the predetermined control of the repeater for the control terminal,
wherein the detecting includes detecting that a failure has occurred in the control link, and the performing of the predetermined control includes performing control of the content configured by the base station for the repeater in response to occurrence of the failure of the control link.

### Supplementary Note 4

The communication method according to supplementary note 3, wherein the configuring of the content of the predetermined control for the control terminal includes configuring whether to cause the repeater to continue the operation when the failure has occurred in the control link.

### Supplementary Note 5

The communication method according to any one of supplementary notes 1 to 4, wherein the detecting includes detecting that a failure has occurred in the repeater, and the performing of the predetermined control includes transmitting failure information of the repeater to the base station in response to occurrence of the failure of the repeater.

### Supplementary Note 6

The communication method according to any one of supplementary notes 1 to 5, further including:
detecting that the failure has been resolved; and
transmitting a notification to the base station in response to resolution of the failure.

### Supplementary Note 7

A relay apparatus for use in a mobile communication system, the relay apparatus including: a repeater configured to relay a radio signal transmitted between a base station and a user equipment; and
a control terminal configured to control the repeater by performing wireless communication with the base station via a control link,
wherein the control terminal, when detecting that a failure has occurred in the control link or the repeater, performs predetermined control in response to the failure.

### REFERENCE SIGNS

1: Mobile communication system
100: UE
200: gNB
210: Transmitter
220: Receiver
230: Controller
240: Backhaul communicator
500A: NCR apparatus
500B: RIS apparatus
511A: Radio unit
511 a: Antenna
511b: RF circuit
511c: Directivity controller
512A: NCR controller
512B: RIS controller
521: Receiver
522: Transmitter
523: Controller
530: Interface

## Claims

1. A communication method using a relay apparatus in a mobile communication system, the communication method comprising:
relaying, by a repeater comprised in the relay apparatus, a radio signal transmitted between a base station and a user equipment;
performing, by a control terminal comprised in the relay apparatus, control of the repeater by performing wireless communication with the base station via a control link;
detecting, by the control terminal, that a failure has occurred in the control link; and
stopping, by the repeater, an operation after the detecting of the failure in the control link by the control terminal.

2. The communication method according to claim 1, further comprising:
configuring, by the base station, content of the predetermined control of the repeater for the control terminal,
wherein the detecting comprises detecting that a failure has occurred in the control link, and
the performing of the predetermined control comprises performing control of the content configured by the base station for the repeater in response to occurrence of the failure of the control link.

3. The communication method according to claim 2, wherein
the configuring of the content of the predetermined control for the control terminal comprises configuring whether to cause the repeater to continue the operation when the failure has occurred in the control link.

4. The communication method according to claim 1, wherein
the detecting comprises detecting that a failure has occurred in the repeater, and
the performing of the predetermined control comprises transmitting failure information of the repeater to the base station in response to occurrence of the failure of the repeater.

5. The communication method according to any one of claims 1 to 4, further comprising:
detecting that the failure has been resolved; and
transmitting a notification to the base station in response to resolution of the failure.

6. A relay apparatus for use in a mobile communication system, the relay apparatus comprising:
a repeater configured to relay a radio signal transmitted between a base station and a user equipment; and
a control terminal configured to control the repeater by performing wireless communication with the base station via a control link,
wherein the repeater is configured to comprise stopping an operation after the control terminal detects that a failure has occurred in the control link.

7. The communication method according to claim 1, comprising:
starting, by the control terminal, RRC Reestablishment in response to detecting the failure in the control link,
wherein the stopping comprises stopping the operation of the repeater in response to the starting of the RRC Reestablishment.

8. The communication method according to claim 1, further comprising:
starting, by the control terminal, RRC Reestablishment in response to detecting the failure in the control link; and
transitioning, by the control terminal, to an RRC idle state when failing in the RRC reestablishment,
wherein the stopping comprises stopping the operation of the repeater in response to the transitioning to the RRC idle state.

9. A communication method using a relay apparatus in a mobile communication system, the communication method comprising:
relaying, by a repeater comprised in the relay apparatus, a radio signal transmitted between a base station and a user equipment;
performing, by a control terminal comprised in the relay apparatus, control of the repeater by performing wireless communication with the base station via a control link;
transitioning, by the control terminal, to an RRC inactive state; and
after the transitioning to the RRC inactive state by the control terminal, continuing, by the repeater, an operation in accordance with configuration content already received from the base station.
